# EUROPEAN PATENT APPLICATION

(11) **EP 2 213 566 A1**
(43) Date of publication of application: **04.08.2010**
(21) Application number: 08765189.9
(22) Date of filing: 05.06.2008
(51) Int. Cl.: B62M 1/10, B62M 3/00, B62M 21/00

(54) **ROTATION TRANSMISSION MECHANISM FOR HUMAN POWER VEHICLE AND HUMAN POWER VEHICLE AND BICYCLE WITH THE SAME**

(30) Priority: 22.10.2007 JP 2007274154
(71) Applicant: Hamamoto, Yoichiro, 120-5 Gongencyo Miyazaki-shi Miyazaki 880-0822 (JP)
(72) Inventor: Hamamoto, Yoichiro, 120-5 Gongencyo Miyazaki-shi Miyazaki 880-0822 (JP)
(74) Representative: HOFFMANN EITLE
(86) International application number: PCT/JP2008/060376
(87) International publication number: WO 2009/054161

(57) **Abstract**

The present invention provides a rotation transmission mechanism for manpowered vehicle, which may be simply incorporated in various types of the existing manpowered vehicle, is capable of reliably absorbing and accumulating impact energy brought about by a load, etc., received externally at the beginning of motion or during running and excessive input energy, remarkably reducing the load given to a human body, effectively utilizing its accumulated energy as a rotation force without any loss when the input energy is decreased or discontinued, is excellent in reliability and efficiency of rotation transmission, is capable of achieving a reduction in weight with a simple structure having a fewer number of components, may be easily assembled and disassembled, and is excellent in maintenance efficiency, mass production efficiency, assembling work efficiency, space-saving, and versatility. The rotation transmission mechanism for manpowered vehicle includes: an inner-rotating member having outer-circumferential projection parts projecting at the outer circumference of the rotation shaft; an outer-rotating member having a side plate part rotatably inserted to the rotation shaft, an outer cylindrical part erected at the outer circumference of the side plate part, and inner-circumferential projection parts projecting at the side plate part and/or the outer cylindrical part at the inner-circumferential side of the outer cylindrical part and alternately disposed by the outer-circumferential projection parts; and a resilient deformation part disposed between the outer-circumferential projection parts and the inner-circumferential projection parts.

## Description

### Technical Field

The present invention relates to a rotation transmission mechanism for manpowered vehicle disposed at a rotation shaft of a manpowered vehicle such as a bicycle, a wheelbarrow for civil construction work, a carriage, a two-wheeled cart, a monocycle, and a tricycle for a child, the wheel (s) of which is (are) rotated by manpower, a manpowered vehicle and a bicycle provided with the same.

### Background Art

In cases of a manpowered vehicle, the wheel(s) of which is (are) rotated by manpower, such as a bicycle, a wheelbarrow for civil construction work, and a two-wheeled cart, once the vehicle starts to run, the vehicle is able to run with small power. However, since the vehicle receives a particularly large repulsive force at the beginning of pedaling such as at startup, acceleration, and climbing, a part of the input energy recoils against the knees, ankles, waist, etc., as an impact, where not only is a large load given to a human body but also the input energy may not be efficiently used, resulting in a lowering in a propulsive force. And, in cases of quick startup, quick acceleration, or climbing a steep road, a load (drag) onto a human body is increased particularly when the weight of an operator of a bicycle and goods placed on the bicycle are heavy, and the required energy is accordingly increased.
In the case of a bicycle, since up-and-down movement of the legs are converted to rotational motion by means of a crank, it is difficult to smoothly transmit strength of the legs particularly at the top dead center and the bottom dead center, wherein an increase in the load onto the knees and ankles is brought about, and the torque is discontinued or the speed is lowered. Further, where running at a low speed, wobbling is likely to be brought about. That is, there has been a problem that the running stability is lowered.
Therefore, conventionally, various structures in a bicycle have been considered for the purpose of absorbing an impact in running, improving the rotation efficiency, and reducing fatigue of an operator by smoothening the propulsive force and acceleration.
For example, Patent Document 1 discloses [a bicycle having an automatic telescopic motion variable type crank mechanism capable of reducing the rotation radius of a pedal in a cruising mode, and securing a large rotational moment by automatically enlarging the rotation radius of the pedal corresponding to a drag when entering a running mode in which a large load is required].
Patent Document 2 discloses [a shock absorber for a bicycle including a first member capable of being fixed at a first frame member and having an accommodation space formed internally and at least a first projecting part projecting inward from the inner-circumferential surface of the accommodation space, a second member capable of being fixed at a second frame member and relatively rotatably disposed in the accommodation space of the first member and having a second projecting part projecting outward from the outer-circumferential surface, and a first resilient member which is mounted in one of two types of spaces sectioned and formed by both the projecting parts between the first member and the second member, is held by the first projecting part and the second projecting part, is disposed with a gap at least either one of the inner-circumferential surface and the outer-circumferential surface, and is telescopically moved by relative rotations of both the members].
Patent Document 3 discloses [a drive gear for a bicycle composed of a gear body having a number of teeth on the outer circumference thereof and a supporting body for supporting the corresponding gear body, which is provided with a power transmission part for transmitting power from the gear body to the supporting body or vice versa between the gear body and the supporting body, wherein a gap able to relatively rotate the gear body and the supporting body at a predetermined angle is provided at the power transmission part, and a resilient body which holds the gap, absorbs the gap by resiliently deforming when the gear body and the supporting body relatively rotate, and is able to transmit power from the power transmission part is provided at a portion different from the power transmission part].
Patent Document 4 discloses [a power transmission device for a bicycle being featured in a structure in which a wound spring wound in the reverse direction of the rotation direction of a front gear is incorporated in the inner-circumferential wall of the front gear, torque resulting from excessive stepping pressure of the pedal arms is accumulated in the wound spring by an action of the wound spring, and the accumulated torque is supplemented when the pedal input is insufficient, thereby improving the rotation efficiency of pedals]. Patent Document 5 discloses [a crank device for a bicycle being featured in that a metal fitting having a plurality of spring receiving pieces radially protruding thereon is attached to the gear shaft of the bicycle, an annular body, the inner-circumferential surface of which is supported on the outer-circumferential edge of the spring receiving pieces, rotating concentrically with the gear shaft is set, and is made into a proximal base part of the a crank, a spring pressing piece is set so as to protrude in accordance with the spring receiving pieces on the inner-circumferential surface of the annular body, and a spring body is inserted and disposed between the spring receiving pieces and the spring pressing piece, wherein when the crank rotates by receiving a force, the annular body of the proximal base part rotates together preceding the gear shaft, the protruded spring pressing piece compresses the spring body, the reaction force presses the spring receiving pieces to rotate the gear shaft.
Patent Document 1: Japanese Published Unexamined Patent Application No. 2003-312581
Patent Document 2: Japanese Published Unexamined Patent Application No. H11-278350
Patent Document 3: Japanese Published Unexamined Patent Application No. S64-63489
Patent Document 4: Japanese Published Unexamined Patent Application No. H9-76980
Patent Document 5: Japanese Published Unexamined Patent Application No. S58-36789

### Disclosure of Invention

### Technical Problem

However, the prior arts described above have the following problems and shortcomings.
(1) A bicycle according to Patent Document 1 has problems in which the structure of the crank mechanism is complicated, the number of components is increased, and operating stability, assembling work efficiency, and mass production efficiency are lacking because the rotation radius of the pedals is automatically telescopically changed in accordance with the drag.
   Also, although, by increasing the rotation radius of the pedals when the drag is large, large output may be obtained with small input and the load at the beginning of pedaling, etc., may be reduced, the loci of the pedals do not make a circular orbit, and unnatural pedaling is required, wherein there is a problem of giving a large load to the knees and ankles, etc.
(2) A shock absorber for a bicycle according to Patent Document 2 is such that when an impact occurs from the road surface onto the first frame member or the second frame member, the first member and the second member relatively rotate, the first resilient member mounted in one space sectioned by both the projecting parts is placed between both the projecting parts and is compressed and is deformed to generate a resilient restoring force, thereby absorbing the impact. However, since the suspension assembly is fixed on the main frame member by the outer member, the impact energy at the beginning of crankmotion is absorbed and accumulated, the accumulated energy is converted to a rotation force when the resilient body is restored, wherein the accumulated energy may not be effectively utilized as a propulsive force, and improvement in the rotation efficiency and acceleration, and uniformity in rotation torque is not taken into consideration.
(3) A drive gear for a bicycle according to Patent Document 3 has an obj ect to reduce an impact due to a drive force when beginning to step on the pedal, which is structured so that a resilient body is provided between the gear body and the supporting body at a position different from the power transmission part and the resilient body is deformed so as to be twisted, wherein since it is hard for the resilient body to be deformed and hard for energy to be accumulated, it is difficult to effectively convert the restoration of the resilient body to a rotation force, and there is a problem that the drive gear is lacking in the efficient use of energy.
   Also, since the drive gear is composed of a number of components, the structure is complicated, wherein mass production efficiency is lacking, and since the gear body and the supporting body are made integral with each other via the resilient body, it is difficult to replace the gear body and the resilient body, wherein there is another problem that the maintenance efficiency is lacking.
(4) The power transmission device for a bicycle according to Patent Document 4 has objects to improve the rotation efficiency by pedals by stabilizing the stepping pressure input and reduce fatigue by smoothening the propulsion and acceleration since torque based on excessive stepping pressure of the pedals is accumulated and the accumulated torque is supplemented when the pedal input is insufficient. However, since accumulation and supplementing of torque are carried out by a wound spring such as a spiral spring (plate-shaped spring) or a coil-shaped spring, it takes time until torque is accumulated after the winding of the wound spring is finished, wherein the pedal shaft idly rotates with respect to the front gear during that time, and no power may be transmitted. Therefore, there is a problem that the use efficiency is not remarkably sufficient.
   In addition, when the wound spring is damaged, no power may be transmitted from the pedal shaft to the front gear, wherein no running becomes available, wherein there is a problem that reliability and stability of power transmission are lacking.
(5) In a crank device for a bicycle according to Patent Document since the inner-circumferential surface of the annular body being the proximal base part of the crank is supported on the outer circumferential edge of the spring receiving pieces, the crank and the gear shaft are easy to made to rotate together by a friction force between the inner-circumferential surface of the annular body and the outer-circumferential edges of the spring receiving pieces, and it is difficult to rotate the annular body prior to the gear shaft. And, the spring body may not be reliably compressed, and the motion stability is lacking, wherein power accumulation at the top dead center (absorption of impact energy) and restoration at the bottom dead center are not sufficiently carried out, and there is a problem that improvement in the rotation efficiency and acceleration efficiency is insufficient, and effects brought about by making the rotation torque uniform are also insufficient.
In addition, since it is necessary that the crank device is attached at both ends of the gear shaft, the number of components is increased, and the entire device becomes complicated and is made large in size, wherein the space saving and the mass production efficiency are lacking, and the gear shaft is subjected to distortion due to the phases of the crank at both ends. Also, accumulation of input energy and conversion of accumulated energy to a rotation force may not be efficiently carried out, and there is a problem that the durability, motion stability and efficiency are lacking.

The present invention solves the above-described conventional problems of the prior arts, and it is therefore an object of the invention to provide a rotation transmission mechanism for manpowered vehicle, which, by being disposed at the rotation shaft of a manpowered vehicle such as a bicycle, a wheelbarrow for civil construction work and a two-wheeled cart that runs by rotating its wheel by manpower, reliably absorbs and accumulates impact energy brought about by a large load, etc., received externally at the beginning of motion, such as at startup, acceleration and climbing and during running, and excessive input energy, is able to remarkably reduce the load onto a human body, to effectively utilize the accumulated energy for rotation of the rotation shaft when the input energy is reduced or is interrupted without any loss, is excellent in reliability and efficiency of rotation transmission, achieves a reduction in weight by a simplified structure having a few components, is easy in disassembling and assembling, is excellent in maintenance efficiency and productivity, may be simply incorporated in a manpowered vehicle such as an existing bicycle, wheelbarrow for civil construction work, two-wheeled cart, and wheelchair, and is excellent in mass production efficiency, assembling work efficiency, space-saving, and versatility, and to provide a manpowered vehicle which, by being provided with the same, is able to reduce the load applied to the legs and waist, etc., of a user, has excellent acceleration and excellent uniformity in rotation torque when conveying heavy goods or causing a heavy-weighted person to ride thereon and has excellent stability at low-speed running, and to provide a bicycle that may be used not only as a daily necessity, which does not require any cumbersome operation, may reduce the load applied onto knees and ankles, etc., of an operator, may be easily operated by a female, an elderly person, or a woman who rides with heavy goods or a child thereon, and may easily ride on an uphill road or a road having large resistance, but also may be used for rehabilitation and competition because of excellent acceleration, uniformity in rotation torque and stability in running at a low speed, and which is excellent in motion stability, handling and versatility.

### Solution to Problem

In order to solve the above-described object, a rotation transmission mechanism for manpowered vehicle, a manpowered vehicle and bicycle provided with the same of the present invention have the following structures.
A rotation transmission mechanism for manpowered vehicle according to the first aspect of the present invention includes such a structure provided with an inner-rotating member having one or more outer-circumferential projection parts formed to be integral with a rotation shaft and projecting to the outer-circumferential side of the rotation shaft or one or more outer-circumferential projection parts fixed on the outer circumference of the rotation shaft and projecting to the outer-circumferential side of the rotation shaft; an outer-rotating member having a side plate part rotatably inserted to the rotation shaft at the position of the inner-rotating member, an outer cylindrical part erected on the outer circumference of the side plate part concentrically with the rotation shaft outside the outer-circumferential projection part of the inner-rotating member, and one or more inner-circumferential projection parts projecting at the side plate part and/or the outer cylindrical part at the inner-circumferential side of the outer cylindrical part and alternately disposed by the outer-circumferential projection part of the inner-rotating member; and one or more resilient deformation parts disposed between the outer-circumferential projection part of the inner-rotating member and the inner-circumferential projection part of the outer-rotating member.
With the structure, the following actions may be brought about.
(1) Since the rotation transmission mechanism is provided with an inner-rotating member having one or more outer-circumferential projection parts formed to be integral with a rotation shaft and projecting to the outer-circumferential side of the rotation shaft or one or more outer-circumferential projection parts fixed on the outer circumference of the rotation shaft and projecting to the outer-circumferential side of the rotation shaft; an outer-rotating member having a side plate part rotatably inserted to the rotation shaft at the position of the inner-rotating member, an outer cylindrical part erected on the outer circumference of the side plate part concentrically with the rotation shaft outside the outer-circumferential projection part of the inner-rotating member, and one or more inner-circumferential projection parts projecting at the side plate part and/or the outer cylindrical part at the inner-circumferential side of the outer cylindrical part and alternately disposed by the outer-circumferential projection part of the inner-rotating member; and one or more resilient deformation parts disposed between the outer-circumferential projection part of the inner-rotating member and the inner-circumferential projection part of the outer-rotating member, the resilient deformation part is deformed while rotation of the rotation shaft rotated by manpower is transmitted to the outer-rotating member or while rotation of the outer-rotating member is transmitted to the rotation shaft, wherein impact energy brought about by a large load, etc. , received from the ground surface at the beginning of motion or during running and excessive input energy may be reliably absorbed and accumulated as resilient energy, and the load onto a human body may be remarkably reduced. Therefore, excellent usability is brought about.
(2) Since the resilient deformation part is disposed between the outer-circumferential projection part of the inner-rotating member and the inner-circumferential projection part of the outer-rotating member, the resilient deformation part may be reliably compressed and deformed by the outer-circumferential projection part and the inner-circumferential projection part when the inner-rotatingmember and the outer-rotating member relatively rotate, and apart of the input energy may be efficiently accumulated. After the resilient deformation part is deformed, the rotation shaft, the inner-rotating member and the outer-rotating member rotate substantially in an integrated manner, and may reliably transmit the rotation force. And, when the resilient deformation part is restored in line with a decrease or discontinuation in the input energy, compression energy (resilient energy) accumulated in the resilient deformation part is converted to rotation energy without any loss and may be effectively utilized as a propulsive force, wherein there is no loss with respect to the input energy, the motion is reliable, and the efficiency in energy use is excellent.
(3) Since the side plate part of the outer-rotating member is rotatably inserted to the rotation shaft, a friction force hardly occurs between the rotation shaft and the outer-rotating member to cause the inner-rotating member and the outer-rotating member to relatively rotate, wherein compression and restoration of the resilient deformation part may be reliably repeated, and the rotation shaft may be smoothly rotated. Stability and efficiency of rotation transmission are excellent.
(4) Since the torque may be supplemented by restoration energy of the resilient deformation part when the input energy decreases or is discontinued, fluctuation in the output energy may be reduced to cause the rotation to be stabilized.

Here, the outer-circumferential projection part may be formed to be integral with the rotation shaft or may be formed of a separate member and attached to the existing rotation shaft. Also, the inner-circumferential projection part may be formed to be integral with the side plate part or the outer cylindrical part or may be formed of a separate member and attached together. The outer-rotating member in which the inner-circumferential projection part, the side plate part and the outer cylindrical part are integrated together is easily assembled and disassembled, and the handling efficiency thereof is excellent. In particular, where the inner-circumferential projection part is formed to be integral with the side plate part and the outer cylindrical part, the durability and productivity of the inner-circumferential projection part are excellent. Although the quantities of the outer-circumferential projection parts and the inner-circumferential projection parts may be appropriately selected, it is preferable that the projection parts are formed at 1 through 8 points, respectively. Where the outer-circumferential projection parts and the inner-circumferential projection parts are provided at more than 8 points, the width of the respective outer-circumferential projection parts and inner-circumferential projection parts in the circumferential direction is made smaller, and the strength thereof is lowered, wherein it is not favourable since the workability and durability thereof are easily lowered.

The resilient deformation part may be such that the resilient deformation part is resiliently deformed when the inner-rotating member and the outer-rotating member relatively rotate and may transmit rotation between the inner-rotating member and the outer-rotating member after being deformed, wherein the amount of deformation and resiliency ratio thereof may be appropriately selected in accordance with the preference of a user. In detail, such a member may be preferably used which may compress and deform synthetic rubber or a plate spring disposed between the outer-circumferential projection part and the inner-circumferential projection part or a resilient body such as a gas sealed between the outer-circumferential projection part and the inner-circumferential projection part.
Where synthetic rubber is used as the resilient deformation part, the synthetic rubber may be filled up between the outer-circumferential projection part and the inner-circumferential projection part without any gap, or may be adhered to or fitted to at least one side surface of the outer-circumferential projection part or the inner-circumferential projection part. In addition, if a resilient deformation part made of synthetic rubber is formed integrally with the outer circumference of the outer-circumferential projection part by insertion molding with a metal-made outer-circumferential projection part adopted as a core material, the number of components may be reduced, and the resilient deformation part is excellent in mass production efficiency. Also, at this time, if the resilient deformation part at the side brought into contact with the inner-circumferential projection part is thickened or is provided with a contact surface formed to be curved or wave-like, the cushioning effect of the resilient deformation part may be effectively increased.

Further, where a gap is formed between the outer-circumferential projection part or the inner-circumferential projection part and the resilient deformation part made of synthetic rubber, the rotation of the rotation shaft or the outer-rotating member is not restricted by the resilient deformation part until the outer-circumferential projection part or the inner-circumferential projection part is brought into contact with the resilient deformation part, and the rotation shaft or the outer-rotating member is caused to rotate without any load, wherein the rotation shaft or the outer-rotating member may be easily given a rotation force and may be easily subjected to quick rotation, and the acceleration efficiency is excellent. As the resilient deformation part, synthetic rubber made of different materials in view of the resiliency ratio, etc. , may be combined with each other, or synthetic rubber and a plate spring maybe combined. A synthetic rubber having a lower resiliency ratio may be combined instead of forming a gap. Also, butadiene rubber, urethane rubber, silicone rubber, etc. , which have a higher repulsive force, may be preferably used as the synthetic rubber. The energy accumulated in the resilient deformation part may be effectively used by the restoring force, wherein the efficiency in energy use is excellent.

Since the rotation transmission mechanism for manpowered vehicle is incorporated in the rotation shaft portion of a manpowered vehicle and outputs a rotation force, which is input from the rotation shaft or the outer-rotating member, from the outer-rotating member or the rotation shaft, the rotation shaft rotates integrally with the inner-rotating member and the outer-rotating member in a steady rotation state. However, in order to reduce an impact force brought about by a load at the beginning of motion and an external force, etc., received during rotation, etc. , and accumulate the energy in the resilient deformation part, when the rotation transmission mechanism receives a large load at the beginning of motion or during rotation, the resilient deformation part is required to be reliably deformed by causing the rotation shaft, the inner-rotating member, and the outer-rotating member to relatively rotate. Therefore, the outer-rotating member is rotatably held with respect to the rotation shaft and the inner-rotating member. In particular, where a bearing is disposed at the contact part between the rotation shaft or the inner-rotating member and the outer-rotating member, it is possible to reliably prevent these members from rotating in an integrated manner, and the rotation shaft or the outer-rotating member may be rotated with a small force with the friction reduced, wherein the power saving, reliability in rotation motion, and durability thereof are excellent.

The rotation transmission mechanism for manpowered vehicle may be incorporated in a manpowered vehicle such as a conventional bicycle, a wheelbarrow for civil construction work, a carriage, a two-wheeled cart, a rickshaw, wheelchair, etc. Further, where the outer-circumferential projection part of the inner-rotating member of the rotation transmission mechanism for manpowered vehicle is formed to be integral with the rotation shaft, the outer-circumferential projection part integrated with the rotation shaft may be incorporated by replacing the existing rotation shaft, and where the outer-circumferential projection part is formed of a separate member, it may be attached to the existing rotation shaft as the rotation transmission mechanism for manpowered vehicle.
Where the rotation transmission mechanism for manpowered vehicle is used for a bicycle, the rotation transmission mechanism for manpowered vehicle is disposed at the middle part in the lengthwise direction of the rotation shaft, and a crank arm provided with a pedal is disposed at both end parts of the rotation shaft. Accordingly, the rotation shaft may be rotated along with the crank arm. While the rotation is transmitted from the inner-rotating member to the outer-rotating member, the resilient deformation part is deformed, wherein not only may the load onto a human body be reduced but also impact energy absorbed by the resilient deformation part may be effectively utilized for rotation of the outer-rotating member. At this time, a rotation force is transmitted from a chain ring fixed or formed at the side part of the side plate part of the outer-rotating member and the outer circumferential part of the outer cylindrical part to the sprocket at the side of the rear wheel via a chain, whereby a propulsive force may be obtained for a bicycle.

Where the rotation transmission mechanism for manpowered vehicle is used for a wheelbarrow for civil construction work, the rotation transmission mechanism for manpowered vehicle is disposed at the middle part in the lengthwise direction of the rotation shaft and both end parts of the rotation shaft are rotatably and pivotally supported. By disposing a tire on the outer circumference of the outer cylindrical part of the outer-rotating member of the rotation transmission mechanism for manpowered vehicle, the outer-rotating member may be rotated along with the tire by manpower. While the rotation is transmitted to the inner-rotating member, the resilient deformation part is deformed, and not only may the load onto a human body be reduced but also the impact energy absorbed by the resilient deformation part may be effectively utilized for rotation of the rotation shaft, wherein a propulsive force may be obtained for the wheelbarrow for civil construction work.

Where used for a carriage, a two-wheeled cart, a wheelchair, etc. , the rotation transmission mechanism for manpowered vehicle is disposed at the left and right rotation shafts which are rotatably and pivotally supported, and a wheel portion such as a tire is disposed on the outer circumference of the outer cylindrical part of the outer-rotating member of the rotation transmission mechanism for manpowered vehicle. When a person pushes a carriage, two-wheeled cart or wheelchair, the outer-rotating member may be rotated by manpower along with the tire, and the resilient deformation part is deformed while the rotation is transmitted to the inner-ratating member. Also, when a user wheels a wheelchair, by rotating a handrim linked with the rotation shaft, the rotation shaft may be rotated by manpower, and while the rotation is transmitted from the inner-rotating member to the outer-rotating member, the resilient deformation part is deformed. In either case, not only may the load onto a human body be reduced but also impact energy absorbed by the resilient deformation part may be effectively utilized for rotation of the rotation shaft and the wheel portion, wherein a propulsive force may be obtained for the two-wheeled cart and wheelchair, etc.

The invention according to the second aspect is a rotation transmission mechanism for manpowered vehicle according to the first aspect, wherein the inner-rotating member includes an outer-circumferential projection part fixing part having a rotation shaft insertion hole in which the rotation shaft is inserted and fixed, and a cover part disposed opposite to the side plate part of the outer-rotating member, and the outer-circumferential projection part is disposed on the outer circumference of the outer-circumferential projection part fixing part.
With the structure, the following actions are brought about in addition to the actions according to the first aspect.
(1) Since the inner-rotatingmember has an outer-circumferential projection part fixing part provided with a rotation shaft insertion hole in which the rotation shaft is inserted and fixed, and the outer-circumferential projection part is disposed on the outer circumference of the outer-circumferential projection part fixing part, a plurality of outer-circumferential projection parts may be integrally handled by the outer-circumferential projection part fixing part even when provided in a plurality, wherein the inner-rotating member may be easily attached to and detached from the rotation shaft, the rotation transmission mechanism may be simply incorporated in the existing manpowered vehicle, and workability and maintenance efficiency for assembling and disassembling are excellent.
(2) Since the inner-rotating member has a cover part disposed opposite to the side plate part of the outer-rotating member, the outer-circumferential projection part, the inner-circumferential, projection parts of the outer-rotating member, and the resilient deformation part, etc. , may be protected from external forces and invasion of foreign substances, etc., wherein the durability, motion stability and maintenance efficiency are excellent.
(3) Since the cover part may press the side surface of the resilient deformation part, the resilient deformation part may be prevented from expanding laterally when the resilient deformation part is compressed, wherein the resilient deformation part may be reliably compressed or restored in the circumferential direction, and the transmission efficiency of the rotation force may be improved.

Here, the cover part may be formed to be integral with the outer-circumferential projection part fixing part and the outer-circumferential projection part or may be formed of a separate member and attached thereto. The inner-rotating member in which the cover part, the outer-circumferential projection part fixing part and the outer-circumferential projection part are integrated is easily assembled and disassembled, wherein the handling performance and productivity are excellent, and the outer-circumferential projection part may be firmly retained by the cover part, wherein the durability is excellent. In addition, by integrating the components, points which may be subjected to strain or play may be decreased, and the assembling accuracy may be improved, wherein excellent motion stability and durability are brought about.

Where a plurality of outer-circumferential projection parts of the inner-rotating member and a plurality of inner-circumferential projection parts of the outer-rotating member are radially disposed at the outer-circumferential side of the rotation shaft and at the inner-circumferential side of the outer cylindrical part of the outer-rotating member, respectively, the outer-circumferential projection parts and the inner-circumferential projection parts may be arranged so as to be meshed with each other, and the load applied onto the rotation shaft, the outer-circumferential projection parts and the inner-circumferential projection parts, etc., may be dispersed, wherein excellent durability is brought about, and excellent motion stability is brought about because stabilized rotation subjected to less fluctuation may be achieved by action of the restoring force in accordance with an input state externally.
Also, the shapes of the outer-circumferential projection part and the inner-circumferential projection part may be appropriately selected. The outer-circumferential projection part and the inner-circumferential projection part may be formed to be substantially fan-shaped by being linearly projected from the outer-circumferential surface of the rotation shaft and from the inner-circumferential surface of the outer cylindrical part of the outer-rotating member, or may be formed to be curved so as to make an arc. Where the contact surface of the outer-circumferential projection part or the inner-circumferential projection part with the resilient deformation part is formed to be curved or wave-like, the contact area thereof with the resilient deformation part may be enlarged to cause the cushioning effect of the resilient deformation part to be increased, thereby improving the impact absorption performance. In addition, the compression energy accumulated in the resilient deformation part may be increased, and it is possible to generate a large rotation force when the resilient deformation part is restored.

The invention according to the third aspect is the rotation transmission mechanism for manpowered vehicle according to the first aspect or the second aspect, wherein the resilient deformation part is disposed or fixed at either one of both the side surface parts of the outer-circumferential projection parts or the inner-circumferential projection parts so that the resilient deformation part is placed between the respective outer-circumferential projection parts of the inner-rotating member and the respective inner-circumferential projection parts of the outer-rotating member when the rotation shaft or the outer-rotating member rotates.
With the structure, the following action is brought about in addition to the actions according to the first aspect or the second aspect.
(1) Since the resilient deformation part is disposed or fixed at either one of both the side surface parts of the outer-circumferential projection parts or the inner-circumferential projection parts so that the resilient deformation part is placed between the respective outer-circumferential projection parts of the inner-rotating member and the respective inner-circumferential projection parts of the outer-rotating member when the rotation shaft or the outer-rotating member rotates, the resilient deformation part placed between the outer-circumferential projection part and the inner-circumferential projection part may be reliably compressed and deformed when the outer-circumferential projection part and the inner-circumferential projection part approach each other by rotations, wherein excellent reliability is brought about in view of reducing the load, and the compression energy accumulated in the resilient deformation part may be efficiently utilized as the rotation force.

The invention according to the fourth aspect is the rotation transmission mechanism for manpowered vehicle according to any one of the first aspect through the third aspect, wherein the outer-circumferential projection part of the inner-rotating member or the inner-circumferential projection part of the outer-rotating member has a contact surface formed to be curved or wave-like, which is brought into contact with the resilient deformation part, or the resilient deformation part has a contact surface formed to be curved or wave-like, which is brought into contact with the outer-circumferential projection part of the inner-rotating member or the inner-circumferential projection part of the outer-rotating member.
With the structure, the following action is brought about in addition to the actions according to any one of the first aspect through the third aspect.
(1) Since the outer-circumferential projection part of the inner-rotating member or the inner-circumferential projection part of the outer-rotating member has a contact surface formed to be curved or wave-like, which is brought into contact with the resilient deformation part, or the resilient deformation part has a contact surface formed to be curved or wave-like, which is brought into contact with the outer-circumferential projection part of the inner-rotating member or the inner-circumferential projection part of the outer-rotating member, the contact area at the beginning of contact may be made smaller, wherein the resilient deformation part is easily deformed, the input energy may be easily absorbed by the resilient deformation part, and excellent efficiency is brought about in view of reducing the load.
   Here, where the contact surface of the outer-circumferential projection part or the inner-circumferential projection part or the resilient deformation part are formed to be curved, it is preferable that the contact surface is caused to bulge outward so that the resilient deformation part is easily deformed.

The invention according to the fifth aspect is the rotation transmission mechanism for manpowered vehicle according to any one of the first aspect through the fourth aspect, wherein the outer-rotating member includes a turn-retaining recessed part which is formed at the inner-circumferential side of the outer cylindrical part and rotatably retains the distal end part at the outer-circumferential side of the outer-circumferential projection part of the inner-rotating member in a fixed angular range.
With the structure, the following action may be brought about in addition to the actions according to any one of the first aspect through the fourth aspect.
(1) Since the outer-rotating member includes a turn-retaining recessed part which is formed at the inner-circumferential side of the outer cylindrical part and rotatably retains the distal end part at the outer-circumferential side of the outer-circumferential projection part of the inner-rotating member in a fixed angular range, relative rotation between the outer-rotating member and the inner-rotating member may be stopped with the outer-circumferential projection part of the inner-rotating member fixed at the stage when the rotation shaft or the outer-rotating member rotates only by a fixed angle set in advance, and the rotation shaft, the inner-rotating member, and the outer-rotating member are caused to rotate integrally with each other, wherein the rotation force may be reliably transmitted, unevenness in the shape and physical properties of the resilient deformation part may be absorbed, and excellent motion stability is brought about.

Here, the turn-retaining recessed part may be formed to be recessed along the inner circumference of the outer cylindrical part of the outer-rotating member. Since, by fitting the distal end part of the outer-circumferential projection part into the turn-retaining recessed part, the side part end surface at the distal end side of the outer-circumferential projection part is brought into contact with the inner wall of the turn-retaining recessed part at the stage when the rotation shaft or the outer-rotating member rotates only by a predetermined angle, the rotation shaft, the inner-rotating member and the outer-rotating member may begin to rotate in an integrated manner regardless of the compressed state of the resilient deformation part.
Further, where the turn-retaining recessed part is formed on the outer-circumferential surface of the outer-circumferential projection part, and a projection part fitted into the turn-retaining recessed part is formed at the inner-circumferential side of the outer cylindrical part of the outer-rotating member, similar effects may also be brought about.
Where the inner-circumferential projection part, the outer-circumferential projection part and the resilient deformation part are detachable, the intensity of the cushioning performance and the amount of deformation of the resilient deformation part may be simply adjusted only by selecting the quantities and dimensions thereof and the resiliency ratio of the resilient deformation part, etc., inaccordance with the preference of a user, etc., wherein excellent versatility is brought about.

A rotation transmission mechanism for manpowered vehicle according to the sixth aspect of the present invention includes such a structure provided with an inner-rotating member having one or more outer-circumferential projection parts formed to be integral with a rotation shaft and projecting to the outer-circumferential side of the rotation shaft or one or more outer-circumferential projection parts fixed on the outer circumference of the rotation shaft and projecting to the outer-circumferential side of the rotation shaft; and an outer-rotating member having a side plate part rotatably inserted to the rotation shaft at the position of the inner-rotating member, an outer cylindrical part erected on the outer circumference of the side plate part concentrically with the rotation shaft outside the outer-circumferential projection part of the inner-rotating member, and one or more inner-circumferential projection parts projecting at the inner-circumferential side of the outer cylindrical part and alternately disposed by the outer-circumferential projection part of the inner-rotating member, wherein at least either one of the outer-circumferential projection part of the inner-rotating member or the inner-circumferential projection part of the outer-rotating member is formed of a resilient body.
With the structure, the following actions may be brought about.
(1) Since the rotation transmission mechanism is provided with an inner-rotating member having one or more outer-circumferential projection parts formed to be integral with a rotation shaft and projecting to the outer-circumferential side of the rotation shaft or one or more outer-circumferential projection parts fixed on the outer circumference of the rotation shaft and projecting to the outer-circumferential side of the rotation shaft; and an outer-rotating member having a side plate part rotatably inserted to the rotation shaft at the position of the inner-rotating member, an outer cylindrical part erected on the outer circumference of the side plate part concentrically with the rotation shaft outside the outer-circumferential projection part of the inner-rotating member, and one or more inner-circumferential projection parts projecting at the inner-circumferential side of the outer cylindrical part and alternately disposed by the outer-circumferential projection part of the inner-rotating member, wherein at least either one of the outer-circumferential projection part of the inner-rotating member or the inner-circumferential projection part of the outer-rotating member is formed of a resilient body, the outer-circumferential projection part or the inner-circumferential projection part, which is formed of a resilient body, is resiliently deformed while rotation of the rotation shaft rotated by manpower is transmitted to the outer-rotating member or while rotation of the outer-rotating member is transmittedto the rotation shaft, wherein impact energy brought about by a large load, etc., received from the ground surface at the beginning of motion or during running and excessive input energy may be reliably absorbed, accumulated as resilient energy, and the load onto a human body may be remarkably reduced. Excellent usability is brought about.
(2) Since the outer-circumferential projection part of the inner-rotating member and the inner-circumferential projection part of the outer-rotating member are alternately disposed, the outer-circumferential projection part or the inner-circumferential projection part, which is formed of a resilient body, is reliably caused to be resiliently deformed when the inner-rotating member and the outer-rotating member relatively rotate, and a part of input energy may be efficiently accumulated, and after the resilient body is deformed, the rotation shaft, the inner-rotating member and the outer-rotating member rotate substantially in an integrated manner, wherein the rotation force may be reliably transmitted, and the resilient energy accumulated in the resilient body may be effectively utilized as a propulsive force by being converted to rotation energy without any loss when the resilient body is restored in line with a decrease in the input energy or discontinuation thereof. Therefore, there is no loss in the input energy, and reliability in motion and efficiency in energy use are excellent.
(3) Since the side plate part of the outer-rotating member is rotatably inserted to the rotation shaft, almost no friction force is generated between the rotation shaft and the outer-rotating member, the inner-rotating member and the outer-rotating member are caused to relatively rotate, and deformation and restoration of the resilient bodymaybe reliably repeated, wherein the rotation shaft is caused to smoothly rotate, and excellent stability in rotation transmission and efficiency thereof are brought about.
(4) Since the torque may be supplemented by restoration energy of the resilient body when the input energy is decreased or discontinued, fluctuation in the output energy is reduced, and the rotation may be stabilized.
(5) Since at least either one of the outer-circumferential projection part or the inner-circumferential projection part is formed of a resilient body, there is no need to separately provide the resilient deformation part, wherein the number of components may be reduced, and the mass production efficiency may be improved.

Here, at least either one of the outer-circumferential projection part of the inner-rotating member or the inner-circumferential projection part of the outer-rotating member is formed of a resilient body. However, where the outer-circumferential projection part is made of a rigid member, it may be formed to be integral with the rotation shaft or may be formed of a separate member and attached to the rotation shaft. Where the inner-circumferential projection part is formed of a rigid member, it may be formed to be integral with the side plate part or the outer cylindrical part or may be formed of a separate member and attached thereto. The outer-rotating member in which the inner-circumferential projection part, the side plate part and the outer cylindrical part are formed to be integral with each other is excellent in handling performance because assembling and disassembling thereof are easy. In particular, where the inner-circumferential projection part is formed to be integral with the side plate part and the outer cylindrical part, the inner-circumferential projection part is excellent in durability and productivity. Further, where the inner-circumferential projection part is formed of a resilient body, it is preferable that a gap is provided between the side plate part and the inner-circumferential projection part so that deformation of the inner-circumferential projection part is not restricted by the side plate part.

Where the outer-circumferential projection part or the inner-circumferential projection part is formed of a resilient body, synthetic rubber and a plate spring are preferably used. Where the outer-circumferential projection part or the inner-circumferential projection part is formed of synthetic rubber, a core material made of metal and synthetic resin may be internally provided. Also, where the outer-circumferential projection part or the inner-circumferential projection part is formed of a plate spring, it is preferable that a fixing groove is formed on the outer circumference of the outer-circumferential projection part fixing part and on the inner circumference of the outer cylindrical part of the outer-rotating member and the root side of the plate spring is inserted and fixed in the fixing groove. The outer-circumferential projection part and the inner-circumferential projection part, which are formed of a plate spring, may be easily attached and detached, wherein excellent mass production efficiency and maintenance efficiency are brought about. In addition, by forming a staged part or a projection part at the end of the root side of the outer-circumferential projection part and the inner-circumferential projection part, which are formed of a plate spring, the outer-circumferential projection part and the inner-circumferential projection part are prevented from falling out from the fixing groove, wherein excellent fixing stability is brought about.

Where one of the outer-circumferential projection part and the inner-circumferential projection part is formed of a rigid member and the other thereof is formed of a plate spring, it is preferable that the end part at the distal end side of the rigid member is formed to be arc-shaped, wherein the plate spring is easily deformed along the arc-shaped end surface of the rigid member, the plate spring may be prevented from being damaged, and excellent motion stability may be brought about.
Although the number of the outer-circumferential projection parts and the inner-circumferential projection parts may be appropriately selected, it is preferable that each thereof is provided with one through eight points. As the number of the outer-circumferential projection parts and the inner-circumferential projection parts exceeds eight points, the intervals between the outer-circumferential projection part and the inner-circumferential projection part become close, wherein the workability and assembling work efficiency are easily lowered, and it is not preferable.
The rotation transmission mechanism for manpowered vehicle differs from the rotation transmission mechanism for manpowered vehicle according to the first aspect in that at least either one of the outer-circumferential projection part and the inner-circumferential projection part is formed of a resilient body, and is incorporated in the rotation shaft portion of a manpowered vehicle such as a bicycle, a wheelbarrow for civil construction work, a carriage, a two-wheeled cart, a rickshaw, a wheelchair, etc. , as in the rotation transmission mechanism for manpowered vehicle according to the first aspect.

The invention according to the seventh aspect is a rotation transmission mechanism for manpowered vehicle according to the sixth aspect, wherein the inner-rotating member has an outer-circumferential projection part fixing part provided with a rotation shaft insertion hole in which the rotation shaft is inserted and fixed, and the outer-circumferential projection part is disposed on the outer circumference of the outer-circumferential projection part fixing part.
With the structure, the following action is brought about in addition to the actions according to the sixth aspect.
(1) Since the inner-rot at ing member has an outer-circumferential projection part fixing part provided with a rotation shaft insertion hole in which the rotation shaft is inserted and fixed, and the outer-circumferential projection part is disposed on the outer circumference of the outer-circumferential projection part fixing part, it is possible to integrally handle a plurality of outer-circumferential projection parts by the outer-circumferential projection part fixing part even when provided in a plurality, wherein the inner-rotating member may be easily attached to and detached from the rotation shaft, and excellent assembling and disassembling work efficiency and excellent maintenance efficiency are brought about.

Here, by providing a cover part disposed opposite to the side plate part of the outer-rotating member, the outer-circumferential projection parts and the inner-circumferential projection parts of the outer-rotating member, etc., may be protected from external forces and invasion of foreign substances, etc., wherein excellent durability, motion stability and maintenance efficiency are brought about.
The cover part may be formed to be integral with the outer-circumferential projection part fixing part or may be formed of a separate member and attached thereto. Also, where the outer-circumferential projection part is made of a rigid member, the cover portion may be formed integrally with the outer-circumferential projection part. The inner-rotating member in which the cover part, the outer-circumferential projection part fixing part and the outer-circumferential projection part are integrated is easily assembled and disassembled, wherein the handling efficiency and productivity are excellent. And, the outer-circumferential projection part may be firmly retained by the cover part, wherein excellent durability is brought about.
Where the outer-circumferential projection part is formed of a resilient body, it is preferable that a gap is provided between the cover part and the outer-circumferential projection part so that deformation of the outer-circumferential projection part is not restricted by the cover part. In this case, the cover part may be rotatably disposed at the rotation shaft as an outer cover member provided so as to cover the opening of the outer-rotating member.

The invention according to the eighth aspect is the rotation transmission mechanism for manpowered vehicle according to the sixth aspect or the seventh aspect, wherein the outer-rotating member has the inner-circumferential projection part formed of a rigid member, and has a stopper part projecting at the end surface part at the inner-circumferential side of at least one of the inner-circumferential projection part or has at least one stopper part projecting at the inner-circumferential side of the outer cylindrical part, and the inner-rotating member has at least one idling prevention projection which is provided so as to project on the outer circumference of the outer-circumferential projection part fixing part and is brought into contact with the stopper part when the inner-rotating member and the outer-rotating member relatively rotate over a set angle.
With the structure, the following actions are brought about in addition to the actions according to the sixth aspect or the seventh aspect.
(1) Since the outer-rotating member has the inner-circumferential projection part formed of a rigid member, and has a stopper part projecting at the end surface part at the inner-circumferential side of at least one of the inner-circumferential projection part or has at least one stopper part projecting at the inner-circumferential side of the outer cylindrical part, and the inner-rotating member has at least one idling prevention projection which is provided so as to project on the outer circumference of the outer-circumferential projection part fixing part and is brought into contact with the stopper part when the inner-rotating member and the outer-rotating member relatively rotate over a set angle, the stopper part and the idling prevention projection are brought into contact with each other at the stage when the rotation shaft or the outer-rotating member rotates only by a predetermined angle, and relative rotation of the outer-rotating member and the inner-rotating member may be stopped, wherein the rotation shaft, the inner-rotating member and the outer-rotating member are caused to integrally rotate, and the rotation forces may be reliably transmitted. Then, unevenness in the shape of the resilient body and in the physical properties thereof may be absorbed, and excellent motion stability is brought about.
(2) Even in a case where the outer-circumferential projection part and the inner-circumferential projection part are damaged, the rotation force may be contiguously transmitted without any discontinuation by the stopper part being brought into contact with the idling prevention projection, wherein excellent motion stability and reliability are brought about.

Here, it is sufficient that at least one or more stopper part(s) and idling prevention projection(s) is (are) provided, respectively. The number and disposition spacing (angle) thereof may be appropriately selected. Where the stopper parts and the idling prevention projections are provided in a plurality, all the stopper parts and the idling prevention projections may transmit rotation until they are damaged, wherein the reliability in motion may be increased.

The invention according to the ninth aspect is the rotation transmission mechanism for manpowered vehicle according to any one of the first aspect through the eighth aspect, wherein the outer-circumferential projection part of the inner-rotating member and the inner-circumferential projection part of the outer-rotating member are radially disposed in a plurality at the outer-circumferential side of the rotation shaft and the inner-circumferential side of the outer cylindrical part of the outer-rotating member, respectively. With the structure, the following action is brought about in addition to the actions according to any one of the first aspect through the eighth aspect. (1) Since a plurality of outer-circumferential projection parts of the inner-rotating member and a plurality of inner-circumferential projection parts of the outer-rotating member are radially disposed at the outer-circumferential side of the rotation shaft and at the inner-circumferential side of the outer cylindrical part of the outer-rotating member, respectively, the outer-circumferential projection parts and the inner-circumferential projection parts may be disposed so as to be meshed with each other, wherein the load applied onto the rotation shaft, the outer-circumferential projection part and the inner-circumferential projection part may be dispersed, and excellent durability is brought about. And, since a substantially fixed rotation force may be transmitted at all times by operating a restoring force in accordance with an input state externally regardless of the rotation position, wherein excellent motion stability is brought about.

A manpowered vehicle according to the tenth aspect of the present invention includes a rotation shaft retaining part, a rotation shaft rotatably retained at the rotation shaft retaining part, a rotation transmission mechanism for manpowered vehicle, which is disposed at the rotation shaft, according to any one of the first aspect through the ninth aspect, and a wheel part disposed on the outer circumference of the outer-rotating member of the rotation transmission mechanism for manpowered vehicle.
With the structure, the following actions may be brought about.
(1) The rotation transmission mechanism for manpowered vehicle is disposed at the rotation shaft rotatably retained at the rotation shaft retaining part, and the wheel part is disposed on the outer circumference of the outer-rotating member of the rotation transmission mechanism for manpowered vehicle. Therefore, by causing the wheel part to rotate by moving the body having the rotation shaft retaining part forward and backward, and causing the rotation shaft to rotate by the left and right crank arms, etc., coupled with the rotation shaft, the resilient deformation part or the resilient body is deformed while rotation of the outer-rotating member rotating along with the wheel part is transmit ted to the rotation shaft through the inner-rotatingmember or while rotation of the inner-rotating member rotating along with the rotation shaft is transmitted to the wheel part through the outer-rotating member, and impact energy brought about by a large load, etc., received from the ground surface at the beginning of motion or during running and excessive input energy may be reliably absorbed and accumulated, wherein not only is it possible to prevent the knees, ankles, and waist, etc. , of a user from being subjected to a large load but also resilient energy accumulated in the resilient deformation part or the resilient body may be converted to rotation energy without any loss by restoring the outer-circumferential projection part or inner circumferential projection part, which is formed of the resilient deformation part or the resilient body at positions where the input energy decreases or the input energy is discontinued, the rotation force may be reliably and smoothly transmitted with fluctuation in torque suppressed, wherein the input energy may be effectively utilized, excellent acceleration and excellent stability in running at a low speed are brought about.
(2) Even when a user quickly starts up, quickly accelerates or climbs a steep uphill road, there is no case where knees and ankles, etc., are injured by an impact absorbing effect of the rotation transmission mechanism for manpowered vehicle, wherein the running stability is excellent, a female, an elderly person, or a woman who rides with heavy goods or a child thereon may easily operate, and everyone from a child to an adult may use the bicycle not only as a daily necessity but also for various uses such as competition and rehabilitation by improving the acceleration, uniformity in rotation torque, and stability in running at a low speed. That is, excellent versatility and handling are brought about.
(3) Since the resilient energy accumulated in the resilient deformation part or the resilient body may be converted to rotation energy at positions where the input energy decreases or the input energy is discontinued, the propulsive force (rotation torque) is not discontinued, and no wobbling is brought about at low-speed running, and stabilized running is enabled even when riding with heavy goods or a child. Therefore, excellent usability is brought about.
(4) Since the resilient deformation part or the resilient body is resiliently deformed in accordance with the running resistance resulting from acceleration or deceleration and a change in the ground conditions, minute vibrations may be absorbed, wherein transmission of vibrations to a human body may be suppressed, and fatigue of a user may be reduced.
(5) Since the resilient energy accumulated in the resilient deformation part or the resilient body changes in accordance with the energy input externally, it is possible to transmit the rotation force in a state most suitable for health conditions and physical strength of an operator and the running conditions, etc., wherein versatility is excellent.

Here, the manpowered vehicle is a vehicle which is caused to run by pedaling by legs or pushing by hands. In detail, the manpowered vehicle is a bicycle, a monocycle, a tricycle for a child, or a wheelbarrow for civil construction work, a two-wheeled cart, and a wheelchair, etc., which are described above.

A bicycle according to the eleventh aspect of the present invention includes a rotation shaft, a set of the rotation transmission mechanism for manpowered vehicle according to any one of the first aspect through the tenth aspect, which is disposed halfway in the lengthwise direction of the rotation shaft, left and right crank arms disposed at both end parts of the rotation shaft with a 180-degree difference in phase, and a chain ring formed or fixed at the side plate part or the outer cylindrical part of the outer-rotating member.
With the structure, the following actions are brought about.
(1) Since the bicycle is provided with the left and right crank arms disposed at both end parts of the rotation shaft with a 180-degree difference in phase, the rotation shaft may be rotated by pedaling the pedals disposed at the left and right crank arms. While rotation of the rotation shaft is transmitted to the outer-rotating member, impact energy brought about by a large load, etc., received from the ground surface at the beginning of motion or during running and excessive input energy may be reliably absorbed and accumulated by the rotation transmission mechanism for manpowered vehicle, wherein not only is it possible to prevent knees and ankles, etc., of an operator from being subjected to a large load but also resilient energy accumulated in a resilient deformation part or a resilient body may be converted to rotation energy without any loss by restoring of the outer-circumferential projection part or the inner-circumferential projection part, which is formed of the resilient deformation part or the resilient body, at positions where input of a force is discontinued, such as the top dead center or the bottom dead center of the crank arms, etc., and the rotation force may be reliably and smoothly transmitted with fluctuation intorque suppressed. The input energy may be effectively utilized, and excellent acceleration and excellent stability in running at a low speed are brought about.
(2) Even when a user quickly starts up, quickly accelerates or climbs a steep uphill road, there is no case where knees and ankles, etc., are injured by an impact absorbing effect of the rotation transmission mechanism for manpowered vehicle, where in the running stability is excellent, a female, an elderly person, or a woman who rides with heavy goods or a child thereon may easily operate, and the bicycle may be used not only as a daily necessity but also for competition and rehabilitation by improving the acceleration, uniformity in rotation torque, and stability in running at a low speed. That is, excellent versatility and handling are brought about.
(3) Since the bicycle is provided with a chain ring formed or fixed at the side plate part or the outer cylindrical part of the outer-rotating member, the rotation shaft, the outer-rotating member and the chain ring are caused to rotate substantially in an integrated manner after the resilient deformation part or the resilient body is deformed, wherein as in the crank mechanism of a prior art bicycle, rotation of the rotation shaft may be reliably transmitted to the drive wheel by a chain stretched to be installed on the chain ring, and excellent reliability is brought about in regard to power transmission and operation.
(4) When passing through the top dead center or the bottom dead center of the crank arms where it is hard to input a force from legs, the crank arms may be smoothly rotated along with the rotation shaft by restoration of the resilient deformation part or the resilient body, wherein it is not necessary to apply unreasonable force to knees and ankles, etc., the amount of use of muscles below the knees, which are hard to keep in shape, is reduced, and the femoral muscle having a large muscle force may be effectively utilized. Therefore, fatigue may be remarkably reduced, and the usability is excellent.
(5) Since the resilient energy accumulated in the resilient deformation part or the resilient body may be converted to rotation energy at positions where input of a force is discontinued, such as the top dead center or the bottom dead center, the propulsive force (rotation torque) is not discontinued, and no wobbling is brought about at low-speed running, and stabilized running is enabled even when riding with heavy goods or a child. Therefore, excellent usability is brought about.
(6) Since the resilient deformation part or the resilient body is resiliently deformed in accordance with the running resistance resulting from acceleration or deceleration and a change in the ground conditions, minute vibrations may be absorbed, wherein transmission of vibrations to the legs is suppressed, and fatigue of a user may be reduced.
(7) Since the resilient energy accumulated in the resilient deformation part or the resilient body changes in accordance with the energy input externally, it is possible to transmit the rotation force in a state most suitable for health conditions and physical strength of an operator and the running conditions, wherein versatility is excellent.

Here, when a bicycle bounds due to an uneven surface of a road, etc., the rotation transmission mechanism for manpowered vehicle moves up and down (vibrates) along with the frame of the bicycle. And, since the pedals attached to the crank arms are pushed downward by the legs of an operator, the resilient deformation part or the resilient body repeats compression and restoration, absorbs impact, converts the impact energy to rotation energy, and utilizes it as a propulsive force. Therefore, the bicycle is hardly influenced by changes in the ground conditions, and the usability is excellent.
Also, the rotation transmission mechanism for manpowered vehicle may be provided on the rotation shaft at the drive wheel side. In addition, where an electric assisting mechanism is concurrently adopted in the rotation transmission mechanism for manpowered vehicle, the load may be remarkably reduced in a steady running state, wherein the usability is excellent.

The invention according to the twelfth aspect is the bicycle according to the eleventh aspect, wherein a plurality of chain rings are detachably disposed on the outer circumference of the outer cylindrical part of the outer-rotating member.
With the structure, the following action is brought about in addition to the actions according to the eleventh aspect.
(1) Since a plurality of chain rings are detachably disposed on the outer circumference of the outer cylindrical part of the outer-rotating member, the gear ratio may be simply adjusted in accordance with the preference of an operator and use purpose, etc., wherein the versatility, freedom in design and maintenance efficiency are excellent.

Here, means for fixing the chain ring may be such that a chain ring fixing piece having a female-threaded part formed therein is disposed on the outer circumference of the outer cylindrical part of the outer-rotating member, and the chain ring and the chain ring fixing piece are fixed by screws, or that a recessed groove part is formed on the outer circumference of the outer cylindrical part of the outer-rotating member, a fixing projection part protruding to the inner-circumferential side of the chain ring is fitted in the recessed groove part, and the recessed groove part and the fixing projection part are fixed with screws. Advantageous Effects of the Invention

As described above, the following advantageous effects are brought about by the rotation transmission mechanism for manpowered vehicle and a bicycle provided with the same according to the present invention.
The following effect is brought about by the invention according to the first aspect.
(1) Since the resilient deformation part disposed between the outer-circumferential projection part formed or fixed to be integral with the rotation shaft at the outer-circumferential side of the rotation shaft and the inner-circumferential projection part projected at the inner-circumferential side of the outer cylindrical part of the outer-rotating member is deformed at the beginning of rotation when the rotation shaft or the outer-rotating member is rotated by manpower, not only is the load required at the beginning of motion reduced but also a part of the input energy (excessive energy) may be reliably absorbed and accumulated in the resilient deformation part. After the resilient deformation part is deformed, the rotation shaft, the inner-rotating member and the outer-rotating member rotate substantially in an integrated manner, the rotation force may be reliably transmitted, and when the resilient deformation part is restored when the input energy is decreased or discontinued, the energy accumulated in the resilient deformation part may be effectively utilized as a propulsive force, wherein it is possible to provide a rotation transmission mechanism for manpowered vehicle having excellent efficiency in power transmission and excellent motion stability.

With the invention according to the second aspect, the following effect may be brought about in addition to the effect according to the first aspect.
(1) Since the outer-circumferential projection part is disposed on the outer circumference of the outer-circumferential projection part fixing part inserted in and fixed on the outer circumference of the rotation shaft, a plurality of outer-circumferential projection parts may be handled integrally with the outer-circumferential projection part fixing part, wherein it is possible to attach the outer-circumferential projection parts to and to detach the same from the rotation shaft, the outer-circumferential projection parts, the inner-circumferential projection parts of the outer-rotating member, and the resilient deformation part, etc., may be reliably protected from external forces and invasion of foreign substances by means of the cover part disposed opposite to the side plate part of the outer-rotating member. Therefore, it is possible to provide a rotation transmission mechanism for manpowered vehicle, which is excellent with respect to workability in assembling and disassembling, durability, motion stability and maintenance efficiency.

With the invention according to the third aspect, the following effect may be brought about in addition to the effect according to the first aspect or the second aspect.
(1) Since the resilient deformation part placed between the outer-circumferential projection part and the inner-circumferential projection part may be reliably compressed and deformed when the rotation shaft or the outer-rotating member rotate, it is possible to provide a rotation transmissionmechanism for manpowered vehicle, in which excellent reliability is brought about in view of reducing the load, and the compression energy accumulated in the resilient deformation part may be efficiently used as the rotation force, having excellent efficiency.

With the invention according to the fourth aspect, the following effect may be brought about in addition to the effect of any one of the first aspect through the third aspect.
(1) Since the outer-circumferential projection part of the inner-rotating member or the inner-circumferential projection part of the outer-rotating member has a contact surface formed to be curved or wave-like, which is brought into contact with the resilient deformation part, or the resilient deformation part has a contact surface formed to be curved or wave-like, which is brought into contact with the outer-circumferential projection part of the inner-rotating member or the inner-circumferential projection part of the outer-rotating member, the contact area at the beginning of contact may be made smaller, wherein the resilient deformation part is easily deformed, the input energy may be easily absorbed by the resilient deformation part, and it is possible to provide a rotation transmission mechanism for manpowered vehicle, which is excellent in view of the efficiency of reducing the load.

With the invention according to the fifth aspect, the following effect may be brought about in addition to the effect according to any one of the first aspect through the fourth aspect.
(1) Since the movable range of the outer-circumferential projection part is kept in a fixed angular range by the turn-retaining recessed part formed at the inner-circumferential side of the outer cylindrical part of the outer-rotating member, there is no case where the resilient deformation part is deformed more than necessary and the rotation shaft or the outer-rotating member reversely rotates, wherein the rotation shaft, the inner-rotating member and the outer-rotating member are caused to integrally rotate at the stage when the rotation shaft or the outer-rotating member rotates only by a fixed angle set in advance, and the rotation force may be reliably transmitted. Therefore, it is possible to provide a rotation transmission mechanism for manpowered vehicle, which is excellent in regard to motion stability and mass production efficiency.

With the invention according to the sixth aspect, the following effect may be brought about.
(1) Since at least either one of the outer-circumferential projection part formed or fixed to be integral with the rotation shaft at the outer-circumferential side of the rotation shaft or the inner-circumferential projection part protruding to the inner-circumferential side of the outer cylindrical part of the outer-rotating member is formed of a resilient body, the outer-circumferential projection part or the inner-circumferential projection part, which is formed of a resilient body, is caused to be resiliently deformed in the middle of rotating the rotation shaft or the outer-rotating member by manpower, thereby not only reducing the load but also reliably absorbing and accumulating a part of the input energy (excessive input energy) in the resilient body. After the resilient body is deformed, the rotation shaft, the inner-rotating member and the outer-rotatingmember rotate substantially in an integrated manner, the rotation force may be reliably transmitted, and the energy accumulated in the resilient body may be effectively utilized as a propulsive force when the resilient body is restored when the input energy is decreased or discontinued. Therefore, it is possible to provide a rotation transmission mechanism for manpowered vehicle, which is excellent in regard to efficiency in power transmission and motion stability.

With the invention according to the seventh aspect, the following effect may be brought about.
(1) Since the outer-circumferential projection part is disposed on the outer circumference of the outer-circumferential projection part fixing part inserted in and fixed on the outer circumference of the rotation shaft, a plurality of outer-circumferential projection parts may be handled along with the outer-circumferential projection part fixing part, and may be easily attached to and detached from the rotation shaft. Therefore, it is possible to provide a rotation transmission mechanism for manpowered vehicle, which is excellent in workability for assembling and disassembling, motion stability and maintenance efficiency.

With the invention according to the eighth aspect, the following effect may be brought about in addition to the effect according to the sixth aspect or the seventh aspect.
(1) Since the outer-rotating member is provided with a stopper part projecting at the end surface part of at least one inner-circumferential side of the inner-circumferential projection part formed of a rigid member or at least one stopper part projecting at the inner-circumferential side of the outer cylindrical part, and at least one idling prevention projection project ing on the outer circumference of the outer-circumferential projection part fixing part, the stopper part and the idling prevention projection are brought into contact with each other at the stage when the rotation shaft or the outer-rotating member rotates only by a predetermined angle, and stop relative rotations of the outer-rotating member and the inner-rotating member. Therefore, it is possible to provide a rotation transmission mechanism for manpowered vehicle, which is capable of causing the rotation shaft, the inner-rotating member and the outer-rotating member to rotate integrally, reliably transmitting the rotation force, and absorbing unevenness in the shape and physical properties of the resilient body, and is excellent in regard to motion stability.

With the invention according to the ninth aspect, the following effect may be brought about in addition to the effect according to any one of the first aspect through the eighth aspect.
(1) Since a plurality of outer-circumferential projection parts and inner-circumferential projection parts are disposed so as to be meshed with each other, it is possible to provide a rotation transmission mechanism for manpowered vehicle, which is capable of dispersing the load applied to the rotation shaft, the outer-circumferential projection parts and the inner-circumferential projection parts, etc., transmitting a substantially fixed rotation force at all times by actuating a restoring force in accordance with an input state externally, and is excellent in regard to durability and motion stability.

With the invention according to the tenth aspect, the following effect may be brought about.
(1) Since the wheel part is rotated by moving the body having the rotation shaft retaining part forward and backward, and the rotation shaft is rotated by the left and right crank arms, etc., coupled with the rotation shaft, the resilient deformation part or the resilient body is deformed by relatively rotating the outer-rotating member and the inner-rotating member, and impact energy brought about by a large load, etc. , received from the ground surface at the beginning of motion or during running and excessive input energy may be reliably absorbed and accumulated, wherein it is possible not only to remarkably reduce the load applied to the knees, ankles, and waist, etc., of a user but also to convert the resilient energy accumulated in the resilient deformation part or the resilient body to rotation energy without any loss by restoring the outer-circumferential projection part or the inner-circumferential projection part, which is formed of a resilient deformation part or a resilient body, at positions where the input energy decreases or is discontinued. Therefore, it is possible to provide a bicycle which is capable of reliably and smoothly transmitting a rotation force while suppressing fluctuation in torque and of effectively utilizing the input energy, and is excellent in regard to acceleration, stability in running at a low speed, and usability.

With the invention according to the eleventh aspect, the following effect may be brought about.
(1) It is possible not only to remarkably reduce the load applied to the knees and ankles, etc. , of both legs due to an impact, etc. , received externally at the beginning of pedaling the pedals for startup, acceleration or climbing an uphill road, etc., or during running, but also to convert the resilient energy accumulated in the resilient deformation part or the resilient body to rotation energy without any loss, and to suppress fluctuation in torque. Also, it is possible to reliably and smoothly transmit power at the positions where input of a force is discontinued, such as the top dead center and the bottom dead center of the crank arms without requiring any special pedaling technique, and to flexibly cope with changes in the ground conditions such as the inclination angle and distance of an uphill road. Therefore, it is possible to provide a bicycle which is excellent in efficiency of power transmission, stability in running, maybe easily operated by a female, an elderly person, or a woman who rides with heavy goods or a child thereon, and may be used as a daily necessity, and furthermore, which may be used for competition and rehabilitation by improving the acceleration, uniformity in rotation torque, and stability in running at a low speed and is excellent in versatility and handling.

With the invention according to the twelfth aspect, the following effect may be brought about in addition to the effect according to the eleventh aspect.
(1) Since a plurality of chain rings are detachably disposed on the outer circumference of the outer cylindrical part of the outer-rotating member, it is possible to provide a bicycle the gear ratio of which may be simply adjusted in accordance with the preference of an operator and the use purpose, and which is excellent in versatility, freedom in design and maintenance efficiency. Brief Description of Drawings

FIG. 1A is a sectional plan view showing the major parts of a bicycle provided with a rotation transmission mechanism for manpowered vehicle according to Embodiment 1, and FIG. 1B is a sectional view taken along the arrow A-A of FIG. 1A;
FIG. 2 is a disassembled perspective view showing the major parts of the rotation transmission mechanism for manpowered vehicle according to Embodiment 1;
FIG. 3 is a partially broken disassembled perspective view showing the rotation transmission mechanism for manpowered vehicle according to Embodiment 1;
FIG. 4A is a sectional plan view showing the major parts of the rotation transmission mechanism for manpowered vehicle according to Embodiment 2, and FIG. 4B is a sectional view taken along the arrow B-B of FIG. 4A;
FIG. 5 is a disassembled perspective view showing the major parts of the rotation transmission mechanism for manpowered vehicle according to Embodiment 2;
FIG. 6A is a side elevational view showing the major parts of a modified version of the rotation transmission mechanism for manpowered vehicle according to Embodiment 2, FIG. 6B is a sectional plan view showing the major parts of a modified version of the rotation transmission mechanism for manpowered vehicle according to Embodiment 2, and FIG. 6C is a perspective view showing the major parts of a modified version of the rotation transmission mechanism for manpowered vehicle according to Embodiment 2;
FIG. 7A is a schematic side elevational view showing the major parts of a bicycle provided with the rotation transmission mechanism for manpowered vehicle according to Embodiment 3, and FIG. 7B is a schematic front elevational view showing the major parts of the rotation transmission mechanism for manpowered vehicle according to Embodiment 3;
FIG. 8 is a sectional front elevational view showing the major parts of a wheelbarrow for civil construction work, which is provided with a rotation transmission mechanism for manpowered vehicle according to Embodiment 4;
FIG. 9 is a sectional side elevational view showing the major parts of a rotation transmission mechanism for manpowered vehicle according to Embodiment 5;
FIG. 10A is a sectional plan view showing the major parts of a rotation transmission mechanism for manpowered vehicle according to Embodiment 6, and FIG. 10B is a sectional view taken along the arrow C-C of FIG. 10A;
FIG. 11 is a sectional side elevational view showing the major parts of a rotation transmission mechanism for manpowered vehicle according to Embodiment 7;
FIG. 12 is a view showing changes in time with respect to speed and acceleration ratio in Example 1 and Comparative Example 1;
FIG. 13 is a view showing changes in time with respect to speed and acceleration ratio in Example 2 and Comparative Example 2;
FIG. 14 is a view showing changes in time with respect to speed and acceleration ratio in Example 3 and Comparative Example 3; and
FIG. 15 is a view showing changes in time with respect to speed and acceleration ratio in Example 4 and Comparative Example 4.

### Reference Signs List

1, 1A, 1A', 1B, 1C, 1D, 1E Rotation transmission mechanisms for manpowered vehicle
2, 2A, 2B, 2C, 2D Inner-rotating members
3, 32 Outer-circumferential projection part fixing parts
3a, 32a Rotation shaft insertion holes
3a' Circular recessed part
3b, 13b, 33b Outer-circumferential projection parts
3c, 5b, 34b Contact surfaces
3d Cover part
3e Distal end part
3f Forward side end surface
3g Backward side end surface
4, 4A, 4A', 4B, 4C, 4D Outer-rotating members
4' Outer cover member
4a Side plate part
4a' Insertion hole
4b, 4f, 34 Outer cylindrical parts
4b' Recessed groove part
4c, 14, 34a Inner-circumferential projection parts
4d Cylindrical supporting part
4e Chain ring fixing part
4g, 34c Turn-retaining recessed part
4h Forward side inner wall
4i, 34d Backward side inner walls
5, 5a, 33c Resilient deformation parts
6 Crank arm
7 Crank arm fixing part
8, 8b, 8c, 8d Chain rings
8a Fixing screw
8e Fixing projection part
9, 9a, 9b, 52a, 63a Bearings
13a Fixing groove
13c Fixing projection part
13d Idling prevention projection
14a Stopper part
33a Base part
35 Resilient damper part
50, 50A, Bicycles
51 Rotation shaft
52, 63 Rotation shaft retaining parts
53, 54, 62 Frames
55a Drive controlling part
56 Drive shaft
57 Pulley
58 Power transmission member
59 Drive detection sensor
60 Wheelbarrow for civil construction work
61 Bucket
64 Wheel part
64a Rim
65 Tire

### Best Mode for Carrying out the Invention

### (Embodiment 1)

A description is given of a rotation transmission mechanism for manpowered vehicle and a bicycle provided with the same according to Embodiment 1 of the present invention with reference to the accompanying drawings.

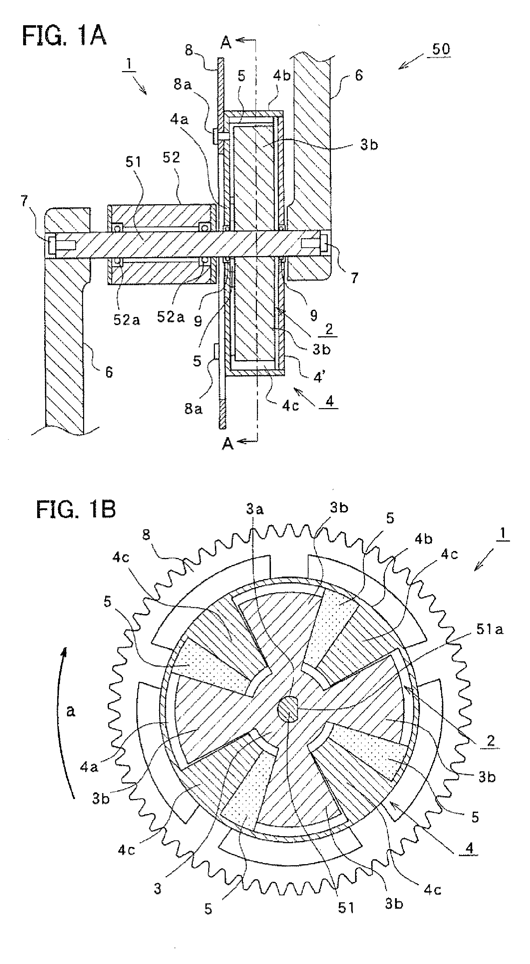

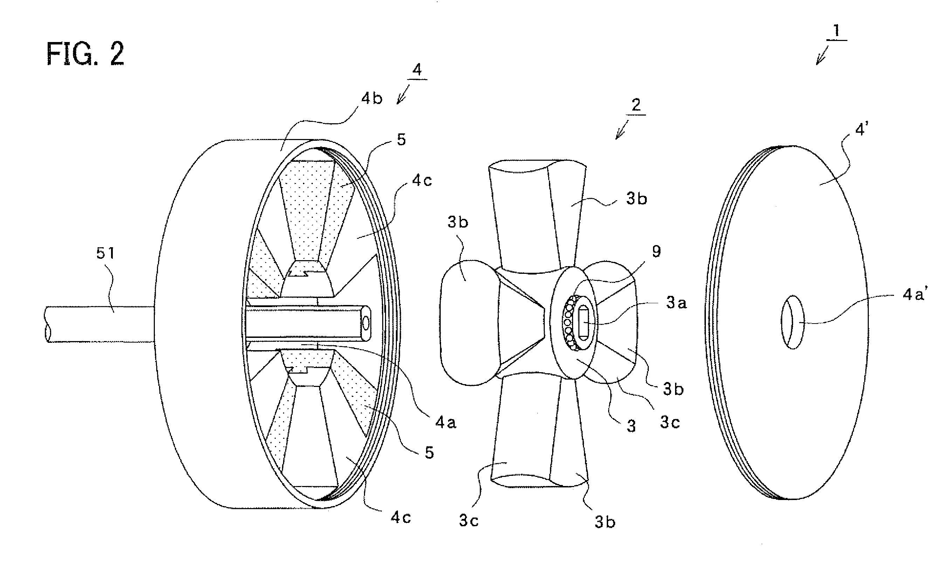

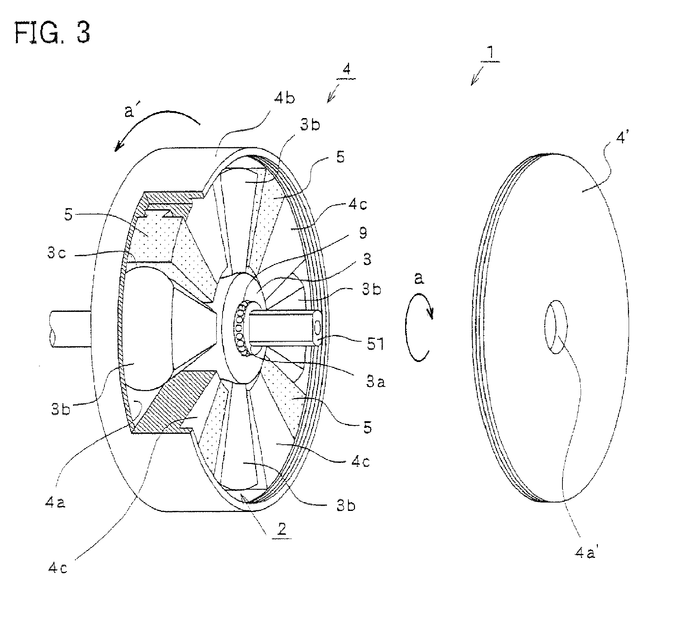

FIG. 1A is a sectional plan view showing the major parts of a bicycle provided with a rotation transmission mechanism for manpowered vehicle according to Embodiment 1, FIG. 1B is a sectional view taken along the arrow A-A of FIG. 1A, FIG. 2 is a disassembled perspective view showing the major parts of the rotation transmission mechanism for manpowered vehicle according to Embodiment 1, and FIG. 3 is a partially broken disassembled perspective view showing the rotation transmission mechanism for manpowered vehicle according to Embodiment 1.
In FIG. 1, reference numeral 1 denotes a rotation transmission mechanism for manpowered vehicle according to Embodiment 1, which is disposed at a rotation shaft 51 of a bicycle 50. Reference numeral 2 denotes an inner-rotating member of the rotation transmission mechanism for manpowered vehicle 1, which has four outer-circumferential projection parts 3b formed to be integral with an outer-circumferential projection part fixing part 3 in axial symmetry therewith so as to project to the outer-circumferential side of the outer-circumferential projection part fixing part 3, which is fixed at the rotation shaft 51, and the rotation shaft 51. Reference numeral 3a denotes a rotation shaft insertion hole through which the rotation shaft 51 is inserted and fixed to the outer-circumferential projection part fixing part 3, and 3c (FIG. 2) denotes a contact surface of the outer-circumferential projection part 3b which is brought into contact with a resilient deformation part described later and is formed to be curved. Reference numeral 4' (FIG. 2) denotes an outer cover member having an insertion hole 4a' drilled at the central part thereof in order to insert the rotation shaft 51 therethrough, which covers an opening of the outer-rotating member 4, 4a denotes a side plate part of the outer-rotating member 4 rotatably inserted to the rotation shaft 51, 4b denotes an outer cylindrical part of the outer-rotating member 4, which is erected on the outer circumference of the side plate part 4a concentrically with the rotation shaft 51 outside of the outer-circumferential projection part 3b of the inner-rotating member 2, and 4c denotes four inner-circumferential projection parts of the outer-rotating member 4, which are formed to be integral with the side plate part 4a and/or the outer cylindrical part 4b so as to project to the inner-circumferential side of the outer cylindrical part 4b or is fixed by an adhesive agent or by screws, etc. , and is alternately disposed by the outer-circumferential projection part 3b of the inner-rotating member 2. Reference numeral 5 denotes a resilient deformation part, made of synthetic rubber, of the rotation transmission mechanism for manpowered vehicle 1, which is disposed at, fixed at or adhered to the side surface part of either one of the outer-circumferential projection part 3b or the inner-circumferential projection part 4c andiscompressedby being placed between the outer-circumferential projection part 3b and the inner-circumferential projection part 4c when the rotation shaft 51 rotates. Reference numeral 6 denotes left and right crank arms disposed with a 180-degree difference in phase at both end parts of the rotation shaft 51. Reference numeral 7 denotes a crank arm fixing part for fixing the crank arms 6 at the rotation shaft 51. Reference numeral 8 denotes a chain ring of a bicycle 50, which is fixed at the side plate part 4a of the outer-rotating member 4 by fixing screws 8a. Reference numeral 9 denotes a bearing for rotatably retaining the outer-rotating member 4 and the chain ring 8 on the rotation shaft 51. Reference numeral 52 denotes a rotation shaft retaining part formed on the frame of the bicycle 50, on which the rotation transmission mechanism for manpowered vehicle 1 is disposed, and 52a denotes a bearing for rotatably retaining the rotation shaft 51, on which the rotation transmission mechanism for manpowered vehicle 1 is disposed, on the rotation shaft retaining part 52.
Further, a rotatable pedal (not illustrated) is disposed at the end part of the respective crank arms 6.

A description is given of operations of the rotation transmission mechanism for manpowered vehicle according to Embodiment 1, which is thus constructed, using FIG. 1 and FIG. 3.
In FIG. 1, when an operator steps on the pedals (not illustrated) disposed at the end parts of the crank arms 6, the outer-circumferential projection part 3b projecting to the outer circumference of the rotation shaft 51 rotates in the direction of the arrow named "a" along with the crank arms 6. At this time, since the bearings 9 are disposed between the rotation shaft 51, the side plate part 4a of the outer-rotating member 4 and the outer cover member 4', the rotation shaft 51 may be rotated with a small force, reducing the friction, and the rotation shaft 51, the inner-rotating member 2, the outer-rotating member 4 and the outer cover member 4' may be prevented from rotating in an integrated manner.
As the rotation shaft 51 rotates, and the outer-circumferential projection part 3b approaches the inner-circumferential projection part 4c, the resilient deformation part 5 disposed at the side surface part of the inner-circumferential projection part 4c is placed between the outer-circumferential projection part 3b and the inner-circumferential projection part 4c and is compressed, wherein a part of input energy is accumulated in the resilient deformation part 5.
Although the resilient deformation part 5 is resiliently deformed at the beginning of rotation of the rotation shaft 51, after being deformed the rotation force of the rotation shaft 51 is transmitted from the outer-circumferential projection part 3b to the inner-circumferential projection part 4c, and all from the rotation shaft 51 to the chain ring 8 rotate substantially in an integrated manner, wherein rotation may be reliably transmitted to the rear wheel side sprocket by a chain (not illustrated) stretched to be installed to the chain ring 8.

In the present embodiment, although the outer-circumferential projection parts 3b and the inner-circumferential projection parts 4c are provided at four points, respectively, the number of outer-circumferential projection parts 3b and inner-circumferential projection parts 4c may be selected in the range from 1 point through 8 points, respectively. This is because as the number of the outer-circumferential projection parts 3b and inner-circumferential projection parts 4c exceeds 8 points, the respective outer-circumferential projection parts 3b and the inner-circumferential projection part 4c are made smaller in the circumferential direction, and the strength thereof is easily weakened, and the workability and durability are easily lowered.
Also, in the present embodiment, although a plurality of outer-circumferential projection parts 3b are inserted to and fixed at the rotation shaft 51 via the outer-circumferential projection part fixing part 3, the respective outer-circumferential projection parts 3b may be directly fixed at the rotation shaft 51, or the outer-circumferential projection parts 3b and the rotation shaft 51 may be formed to be integral with each other.
In addition, in the present embodiment, although the outer-rotatingmember 4 and the chain ring 8 are formed to be separate members from each other, the chain ring 8 may be integrally formed at the side plate part 4a of the outer-rotating member 4 and on the outer circumference of the outer cylindrical part 4b.

The outer-circumferential projection part 3b and the resilient deformation part 5 may be in contact with each other at the beginning. Where a gap is formed between the outer-circumferential projection part 3b and the resilient deformation part 5, the rotation shaft 51 is caused to rotate without any load without the rotation of the rotation shaft 51 being restricted by the resilient deformation part 5 until the outer-circumferential projection part 3b and the resilient deformation part 5 are brought into contact with each other, wherein a rotation force may be easily increased, and quick startup and quick acceleration may be easily carried out.
In addition, in the present embodiment, as shown in FIG. 2 and FIG. 3, the contact surface 3c of outer-circumferential projection part 3b is formed to be convexly arc-shaped to facilitate deformation of the resilient deformation part 5. However, the shape of the contact surface 3c is not restricted thereto. The shape thereof may be appropriately selected in accordance with the resiliency ratio of the resilient deformation part 5. The shape may be concavely arc-shape, flat, and triangular, or may be formed to be wave-like. Also, similar effects may be brought about where the contact surface of the resilient deformation part 5 is formed to be concavely and convexly arc-shaped, triangular, or wave-like.
Also, the shapes of the outer-circumferential projection part 3b, the inner-circumferential projection part 4c and the resilient deformation part 5 are not restricted to the shapes of the present embodiment. For example, the shape of the resilient deformation part 5 may be formed to be semi-spherical or spherical. Also, the resilient deformation part 5 is not required to be disposed at the entire surface of the side part of the inner-circumferential projection part 4c. That is, the resilient deformation part 5 may be disposed at a part of the root side or the distal end side of the inner-circumferential projection part 4c in accordance with the resiliency ratio, etc. In addition, in the present embodiment, the resilient deformation part 5 is fixed by a dovetail groove formed in the inner-circumferential projection part 4c. However, the method for fixing the resilient deformation part 5 is not restricted thereto. For example, it may be adhered using an adhesive agent, or both may be concurrently adopted.

Where a rotation transmission mechanism for manpowered vehicle 1 according to Embodiment 1 is used in a bicycle, as described above, when the rotation shaft 51 is rotated in the direction of the arrow named "a" in FIG. 1 and the rotation is transmitted to the chain ring 8 via the outer-rotating member 4, a part of input energy is accumulated in the resilient deformation part 5 while reducing the load, and may be used as rotation energy when the resilient deformation part 5 is restored. Where the rotation transmission mechanism for manpowered vehicle 1 according to Embodiment 1 is used in a wheelbarrow for civil construction work, a rickshaw, a two-wheeled cart, etc., a tire (not illustrated) is disposed on the outer circumference of the outer-rotating member 4 instead of the chain ring 8, and the outer-rotating member 4 is rotated in the direction of the arrow named "a'" in FIG. 3 along with the tire, wherein a part of input energy may be accumulated in the resilient deformation part 5 while reducing the load when the rotation is transmitted to the rotation shaft 51.
Since the rotation transmission mechanism for manpowered vehicle 1 outputs a rotation force, which is input from the rotation shaft 51 or the outer-rotating member 4, from the outer-rotating member 4 or the rotation shaft 51, the rotation shaft 51 and the outer-rotating member 4 integrally rotate in a steady rotation state. However, since a part of input energy is accumulated in the resilient deformation part 5 while reducing the load received at the beginning of motion or during rotation, it is necessary that the resilient deformation part 5 is deformed by relatively rotating the input side rotation shaft 51 and the outer-rotating member 4. In the present embodiment, although bearings 9 are disposed between the rotation shaft 51 and the outer-rotating member 4, the disposition of the bearings 9 is not restricted thereto. A cylindrical sleeve or the like, which may rotatably retain the rotation shaft 51 and the outer-rotating member 4 with each other may be acceptable.
Further, by providing a gap between both side surfaces and the outer circumferential surface of the outer-circumferential projection part 3b and the side plate part 4a, the outer cover member 4' and the outer cylindrical part 4b of the outer-rotating member 4, the inner-rotating member 2 and the outer-rotating member 4 relatively and smoothly rotate without any interference therebetween, and may reliably deform the resilient deformation part 5, wherein excellent reliability in motion is brought about.

Since the rotation transmission mechanism for manpowered vehicle according to Embodiment 1 is constructed as described above, the following actions are brought about.
(1) The rotation transmission mechanism for manpowered vehicle 1 is provided with the inner-rotating member 2 fixed on the outer circumference of the rotation shaft 51 and having a plurality of outer-circumferential projection parts 3b projecting to the outer-circumferential side of the rotation shaft 51; the outer-rotating member 4 having the side plate part 4a rotatably inserted to the rotation shaft 51 at the position of the inner-rotating member 2, the outer cylindrical part 4b erected on the outer circumference of the side plate part 4a concentrically with the rotation shaft 51 outside the outer-circumferential projection part 3b of the inner-rotating member 2, and a plurality of inner-circumferential projection parts 4c projecting at the side plate part 4a and the outer cylindrical part 4b at the inner-circumferential side of the outer cylindrical part 4b and alternately disposed by the outer-circumferential projection parts 3b of the inner-rotating member 2; and the resilient deformation part 5 disposed between the outer-circumferential projection parts 3b of the inner-rotating member 2 and the inner-circumferential projection parts 4c of the outer-rotating member 4, respectively. Therefore, the resilient deformation part 5 is deformed while rotation of the rotation shaft 51 rotated by manpower is transmitted to the outer-rotating member 4 or while rotation of the outer-rotating member 4 is transmitted to the rotation shaft 51, wherein impact energy brought about by a large load, etc., received from the ground surface at the beginning of motion or during running and excessive input energy may be reliably absorbed and accumulated as resilient energy, and the load onto a human body may be remarkably reduced, and excellent usability is brought about.
(2) Since the resilient deformation part 5 is disposed between the outer-circumferential projection part 3b of the inner-rotating member 2 and the inner-circumferential projection part of the outer-rotating member 4, the resilient deformation part 5 may be reliably compressed and deformed by the outer-circumferential projection part 3b and the inner-circumferential projection part 4c when the inner-rotating member 2 and the outer-rotating member 4 relatively rotate, a part of input energy may be efficiently accumulated, the rotation shaft 51, the inner-rotating member 2 and the outer-rotating member 4 rotate substantially in an integrated manner after the resilient deformation part 5 is deformed, and the rotation force may be reliably transmitted. Further, when the resilient deformation part 5 is restored when the input energy is decreased or discontinued, compression energy (resilient energy) accumulated in the resilient deformation part 5 may be converted to rotation energy without any loss and may be effectively utilized as a propulsive force, wherein there is no loss in terms of the input energy, and reliability in motion and efficiency in energy use are excellent.
(3) Since the side plate part 4a of the outer-rotating member 4 is rotatably inserted to the rotation shaft 51, a friction force is hard to bring about between the rotation shaft 51 and the outer-rotating member 4, and the inner-rotating member 2 and the outer-rotating member 4 are caused to relatively rotate, wherein compression and restoration of the resilient deformation part 5 may be reliably repeated, the rotation shaft 51 may be smoothly rotated, and the stability of rotation transmission and the efficiency thereof are excellent.
(4) Since the torque maybe supplemented by the restoration energy of the resilient deformation part 5 when the input energy decreases or is discontinued, the rotation may be stabilized by reducing fluctuation in the output energy.
(5) Since the inner-rotating member 2 is provided with the outer-circumferential projection part fixing part 3 having a rotation shaft insertion hole 3a in which the rotation shaft 51 is inserted and fixed, and the outer-circumferential projection parts 3b are disposed on the outer circumference of the outer-circumferential projection part fixing part 3, a plurality of outer-circumferential projection parts 3b may be integrally handled by the outer-circumferential projection part fixing part 3, wherein the inner-rotating member 2 may be easily attached to and detached from the rotation shaft 51, the work efficiency of assembling and disassembling, and maintenance efficiency are excellent.
(6) Since the side surface of the resilient deformation part 5 may be pressed by the outer cover member 4', the resilient deformation part 5 is prevented from expanding laterally when the resilient deformation part 5 is compressed, and the resilient deformation part 5 may be reliably compressed or restored in the circumferential direction, wherein the transmission efficiency of the rotation force may be improved.
(7) Since a plurality of outer-circumferential projection parts 3b of the inner-rotating member 2 and a plurality of inner-circumferential projection parts 4c of the outer-rotating member 4 are radially disposed at the outer-circumferential side of the rotation shaft 51 and at the inner-circumferential side of the outer cylindrical part 4b of the outer-rotating member 4, respectively, the outer-circumferential projection parts 3b and the inner-circumferential projection parts 4c may be disposed so as to be meshed with each other with the resilient deformation part 5 placed therebetween. Therefore, the load given to the rotation shaft 51 and the resilient deformation part 5, etc., may be dispersed, wherein excellent durability is brought about, a substantially fixed rotation force may be transmitted at all times by actuating the restoring force in accordance with an input state externally, and the motion stability is excellent.
(8) Since the resilient deformation part 5 is disposed or fixed at one side surface part of the inner-circumferential projection parts 4c so as to be placed between the respective outer-circumferential projection parts 3b of the inner-rotating member 2 and the respective inner-circumferential projection parts 4c of the outer-rotating member 4 when the rotation shaft 51 or the outer-rotating member 4 rotates, the resilient deformation part 5 placed between the outer-circumferential projection parts 3b and the inner-circumferential projection parts 4c may be reliably compressed and deformed, without the rotations of the rotation shaft 51 or the outer-rotating member 4 being restricted by the resilient deformation part 5, when the outer-circumferential projection parts 3b and the inner-circumferential projection parts 4c approach each other by the rotations, wherein the reliability in reducing the load is excellent, and the compression energy accumulated in the resilient deformation part 5 may be efficiently utilized as a rotation force.
(9) Since the outer-circumferential projection part 3b of the inner-rotatingmember 2 has a contact surface 3c formed to be curved, which is brought into contact with the resilient deformation part 5, the contact area at the beginning of contact may be reduced, wherein the resilient deformation part 5 may be easily deformed, the input energy may be easily absorbed in the resilient deformation part 5, and the efficiency in reducing the load is excellent.
(10) Since a bearing 9 is disposed between the rotation shaft 51, the outer-rotating member 4 and the outer cover member 4', and the rotation shaft 51, the outer-rotating member 4 and the outer cover member 4' are rotatably retained with each other, the rotation shaft 51, the outer-rotating member 4 and the outer cover member 4' are reliably prevented from rotating in an integrated manner at the beginning of motion, and the rotation shaft 51 may be rotated with a small force by reducing the friction, wherein the power saving and reliability in rotation motion are excellent.

Since a bicycle provided with the rotation transmission mechanism for manpowered vehicle according to Embodiment 1 is constructed as described above, the following actions are brought about.
(1) Since the bicycle includes left and right crank arms 6 disposed at both end parts of the rotation shaft 51 with a 180-degree difference in phase, the rotation shaft 51 is caused to rotate by pedaling the pedals disposed at the left and right crank arms 6, and the rotation transmission mechanism for manpowered vehicle 1 may reliably absorb and accumulate impact energy brought about by a large load, etc., received from the ground surface at the beginning of motion or during running and excessive input energy while rotation of the rotation shaft 51 is transmitted to the outer-rotating member 4, wherein it is possible not only to prevent knees and ankles, etc., of an operator from being subjected to a large load but also to convert resilient energy accumulated in the resilient deformation part 5 to rotation energy without any loss by restoration of the resilient deformation part 5 at positions where input of a force is discontinued, such as the top dead center and the bottom dead center of the crank arms 6, the rotation force may be reliably and smoothly transmitted while suppressing fluctuation in torque, and the input energy may be effectively utilized. Excellent acceleration and excellent stability in running at a low speed running are brought about.
(2) There is no case where knees and ankles, etc., are injured, by an impact absorbing effect of the rotation transmission mechanism for manpowered vehicle 1 even when a user quickly starts up, quickly accelerates or climbs a steep uphill road. Excellent stability in running is brought about. A female, an elderly person, or a woman who rides with heavy goods or a child thereon may easily operate, and the bicycle may be used not only as a daily necessity but also for competition and rehabilitation by improving the acceleration, uniformity in rotation torque, and stability in running at a low speed and is excellent in versatility and handling.
(3) Since the bicycle is provided with a chain ring 8 fixed at the side plate part 4a of the outer-rotating member 4, the rotation shaft 51, the outer-rotating member 4 and the chain ring 8 rotate substantially in an integrated manner after the resilient deformation part 5 is deformed. Therefore, as in the crane mechanism of a prior art bicycle, rotation of the rotation shaft 51 may be reliably transmitted to the drive wheel by a chain stretched to be installed at the chain ring 8, wherein excellent reliability is brought about in regard to power transmission and operation.
(4) When passing through the top dead center or the bottom dead center of the crank arms 6 where a force from legs is hard to be input, the crank arms 6 may be smoothly rotated along with the rotation shaft 51 by restoration of the resilient deformation part 5, it is not necessary to apply unreasonable force to the knees and ankles, etc. , and the amount of use of muscles below the knees, which are hard to keep in shape, is reduced, and the femoral muscle having a large muscle force may be effectively utilized. Therefore, fatigue may be remarkably reduced, and the usability is excellent.
(5) Since the resilient energy accumulated in the resilient deformation part 5 may be converted to rotation energy at positions where input of a force is discontinued, such as the top dead center or the bottom dead center, a propulsive force (rotation torque) is not discontinued, no wobbling is brought about at low-speed running, and stabilized running is enabled even when riding with heavy goods or a child. The usability is excellent.
(6) Since the resilient deformation part 5 is resiliently deformed in accordance with the running resistance resulting from acceleration or deceleration and a change in the ground conditions, minute vibrations may be absorbed, wherein transmission of vibrations to legs is suppressed, and fatigue of a user may be reduced.
(7) Since the resilient energy accumulated in the resilient deformation part 5 changes in accordance with the energy input externally, it is possible to transmit the rotation force in a state most suitable for health conditions and physical strength of an operator and the running conditions, etc., wherein versatility is excellent.

### (Embodiment 2)

A description is given below of a rotation transmission mechanism for manpowered vehicle according to Embodiment 2 of the present invention with reference to the drawings.

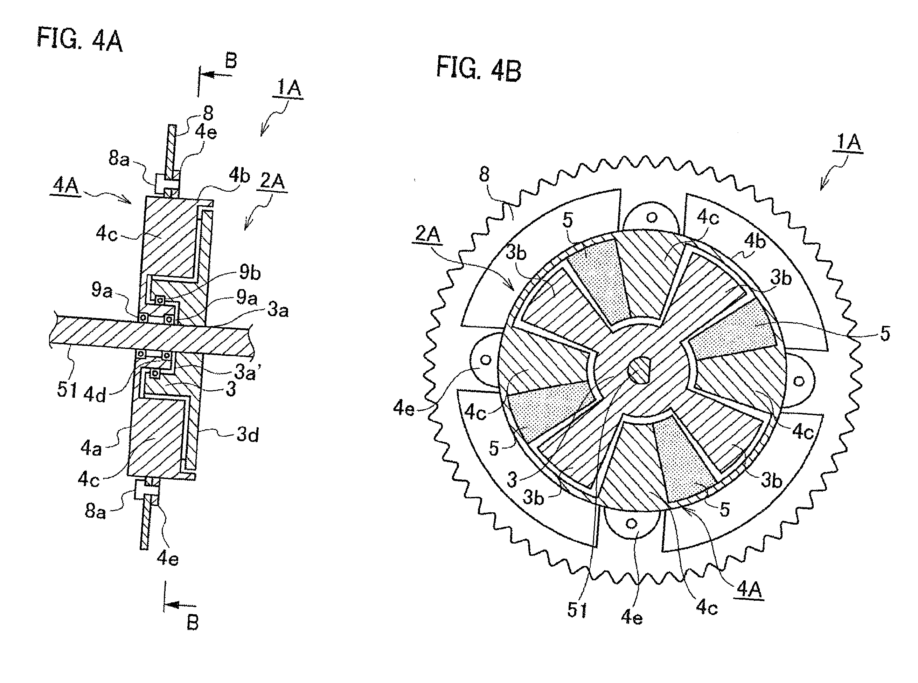

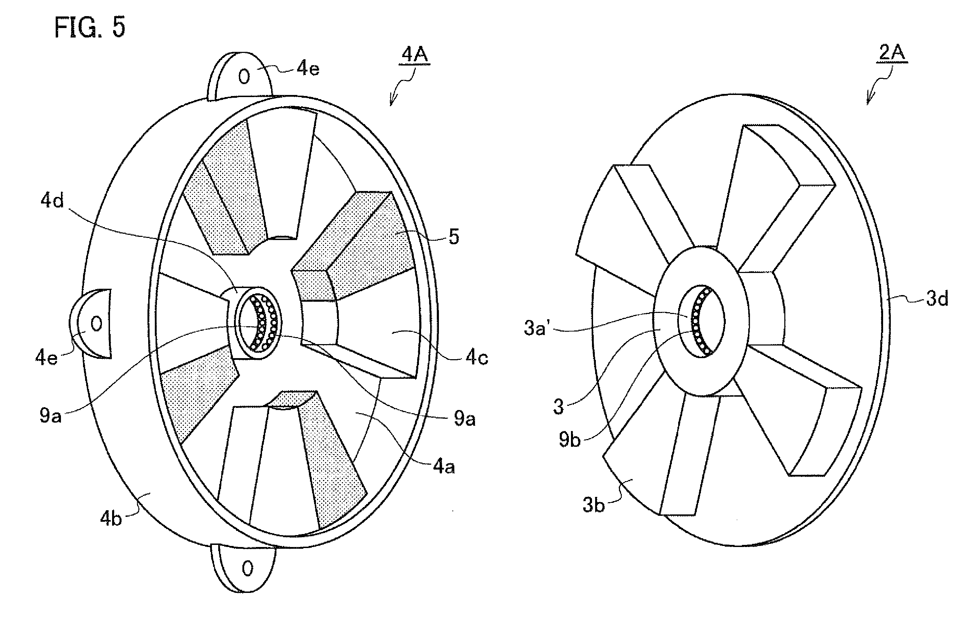

FIG. 4A is a sectional plan view showing the major parts of the rotation transmission mechanism for manpowered vehicle according to Embodiment 2, and FIG. 4B is a sectional view taken along the arrow B-B of FIG. 4A. FIG. 5 is a disassembled perspective view showing the maj or parts of the rotation transmission mechanism for manpowered vehicle according to Embodiment 2. Also, components that are similar to those in Embodiment 1 are given the same reference numerals, and the description thereof is omitted.
In FIG. 4 and FIG. 5, a rotation transmission mechanism for manpowered vehicle 1A according to Embodiment 2 differs from the rotation transmission mechanism for manpowered vehicle 1 according to Embodiment 1 in that the inner-rotating member 2A is formed to be integral with the outer-circumferential projection part fixing part 3, the outer-circumferential projection part 3b and the cover part 3d, and is disposed opposite to the side plate part 4a of the outer-rotating member 4A, in that a circular recessed part 3a' in which a cylindrical supporting part 4d of the outer-rotating member 4A, described later, is inserted is formed at the center of the outer-circumferential projection part fixing part 3 of the inner-rotating member 2A, in that a cylindrical supporting part 4d fitted in the circular recessed part 3a' of the inner-rotating member 2A is formed at the center of the side plate part 4a of the outer-rotating member 4A, and in that four chain ring fixing parts 4e for fixing the chain ring 8 are formed on the outer circumference of the outer cylindrical part 4b of the outer-rotating member 4A.
Also, in FIG. 4 and FIG. 5, reference numeral 9a denotes a bearing which is disposed on the inner circumference of the cylindrical supporting part 4d of the outer-rotating member 4A and rotatably retains the outer-rotating member 4A to the rotation shaft 51, 9b denotes a bearing which is disposed on the inner circumference of the circular recessed part 3a' of the inner-rotating member 2A and rotatably retains the inner-rotating member 2A to the outer-rotating member 4A.

The rotation transmission mechanism for manpowered vehicle 1A according to Embodiment 2 may reduce the number of components in comparison with the rotation transmission mechanism for manpowered vehicle 1 according to Embodiment 1. The assembling and disassembling thereof are facilitated, and the mass production efficiency and maintenance efficiency are excellent.
In addition, since the outer-rotating member 4A is provided with a chain ring fixing part 4e, the chain ring 8 may be simply exchanged to change the gear ratio, wherein the maintenance efficiency and versatility are excellent.

Next, a description is given of a modified version of the rotation transmission mechanism for manpowered vehicle 1A according to Embodiment 2.

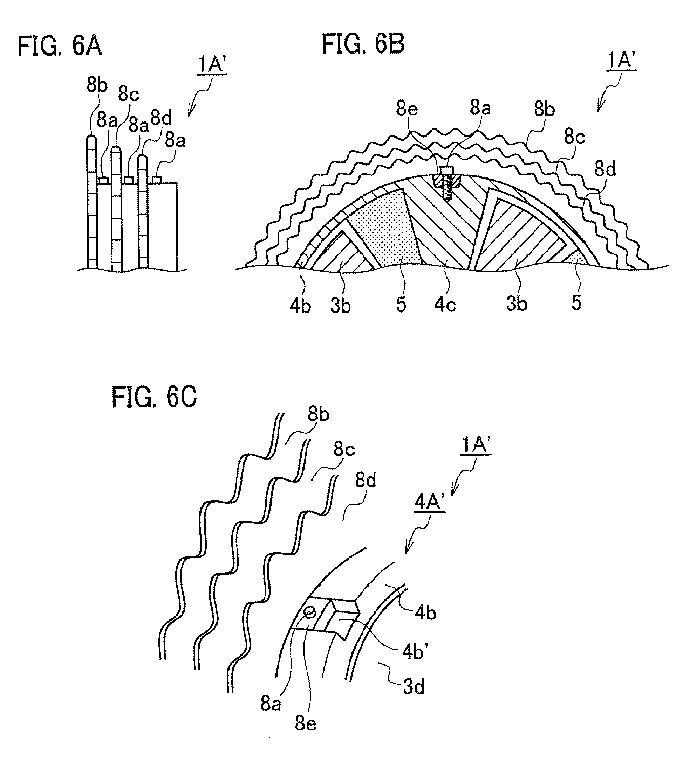

FIG. 6A is a side elevational view showing major parts of a modified version of the rotation transmission mechanism for manpowered vehicle according to Embodiment 2, FIG. 6B is a sectional plan view showing the major parts of a modified version of the rotation transmission mechanism for manpowered vehicle according to Embodiment 2, and FIG. 6C is a perspective view showing the major parts of a modified version of the rotation transmission mechanism for manpowered vehicle according to Embodiment 2. Also, components that are similar to those in Embodiment 2 are given the same reference numerals, and the description thereof is omitted.
In FIG. 6, the rotation transmission mechanism for manpowered vehicle 1A' of the modified version of Embodiment 2 differs from the rotation transmission mechanism for manpowered vehicle 1A according to Embodiment 2 in that a plurality of chain rings 8b, 8c, 8d are detachably disposed on the outer circumference of the outer cylindrical part 4b of the outer-rotating member 4A'.
In FIG. 6, reference numeral 4b' denotes a recessed groove part formed on the outer circumference of the outer cylindrical part 4b. Reference numeral 8e denotes a fixing projection part projecting to the inner circumferential side of the respective chain rings 8b through 8d and fitted in the recessed groove part 4b'.
By the fixing projection part 8e being fitted in the recessed groove part 4b' of the outer cylindrical part 4b, it is possible to reliably prevent the chain rings 8b through 8d from idling with respect to the outer-rotating member 4A'. Also, by the fixing projection part 8e being fixed with fixing screws 8a at the outer cylindrical part 4b, the chain rings 8b through 8d may be firmly fixed, wherein slip thereof in the axial direction may be reliably prevented.

In addition, since the operations of the rotation transmission mechanism for manpowered vehicle 1A according to Embodiment 2 and of the rotation transmission mechanism for manpowered vehicle 1A' according to the modified version are the same as those of the rotation transmission mechanism for manpowered vehicle 1 according to Embodiment 1, the description thereof is omitted.

Since the rotation transmission mechanism for manpowered vehicle according to Embodiment 2 is constructed as described above, the following actions are brought about in addition to those obtained by Embodiment 1.
(1) Since the inner-rotating member 2Ahas a cover part 3d disposed opposite to the side plate part 4a of the outer-rotating member 4A, the outer-circumferential projection part 3b, the inner-circumferential projection part 4c of the outer-rotating member 4 and the resilient deformation part 5, etc., may be protected from external forces and invasion of foreign substances, etc. , wherein the durability, motion stability and maintenance efficiency are excellent.
(2) The side surface of the resilient deformation part 5 may be pressed by the cover part 3d, the resilient deformation part 5 is prevented from expanding laterally when the resilient deformation part 5 is compressed, and the resilient deformation part 5 is reliably compressed or restored in the circumferential direction, wherein the transmission efficiency of the rotation force may be improved.

Since a bicycle provided with the rotation transmission mechanism for manpowered vehicle according to Embodiment 2 is constructed as described above, the following action is brought about in addition to the actions similar to those obtained by Embodiment 1. (1) Where a plurality of chain rings 8b through 8d are detachably disposed on the outer circumference of the outer cylindrical part 4b of the outer-rotating member 4A', the gear ratio may be simply adjusted in accordance with the preference of an operator and the use purpose, etc., wherein the versatility, freedom in design and maintenance efficiency are excellent.

### (Embodiment 3)

A description is given of a rotation transmission mechanism for manpowered vehicle according to Embodiment 3 of the present invention and a bicycle provided with the same with reference to the drawings.

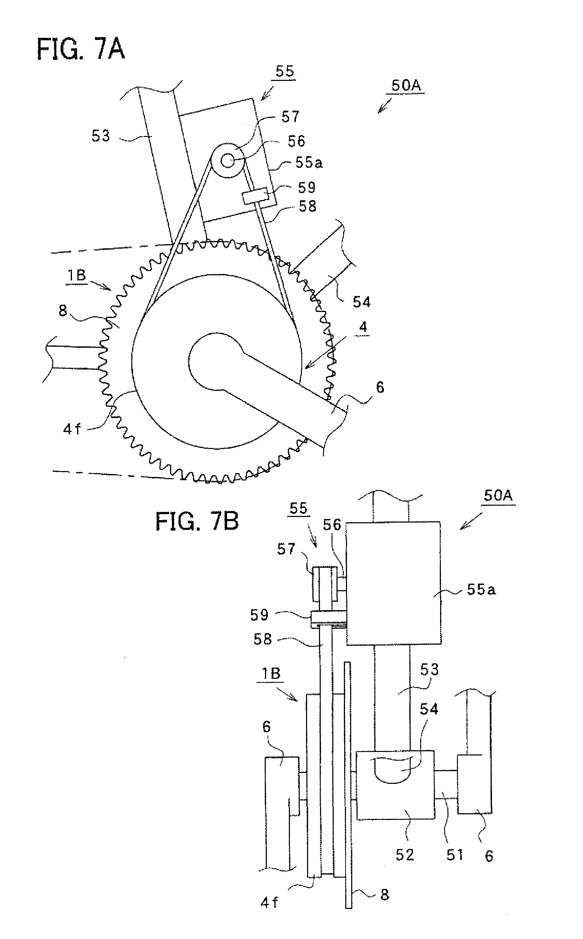

FIG. 7A is a schematic side elevational view showing the major parts of a bicycle provided with the rotation transmission mechanism for manpowered vehicle according to Embodiment 3, and FIG. 7B is a schematic front elevational view showing the major parts of the rotation transmission mechanism for manpowered vehicle according to Embodiment 3. Also, components that are similar to those of Embodiment 1 are given the same reference numerals, and the description thereof is omitted.
In FIG. 7, the rotation transmission mechanism for manpowered vehicle 1B according to Embodiment 3 differs from Embodiment 1 in that a groove and a projection, to which a power transmission member 58 such as a V-belt, a flat belt, a chain, is stretched to be installed, are formed on the outer circumference of the outer cylindrical part 4f of the outer-rotating member 4. Therefore, power of an electric assisting mechanism 55 is transmitted to the chain ring 8 via the outer-rotating member 4.
In FIG. 7, reference numeral 50A denotes a bicycle provided with a rotation transmission mechanism for manpowered vehicle 1B according to Embodiment 3. Reference numerals 53 and 54 denote frames of the bicycle 50A, which are linked with the rotation shaft retaining part 52. Reference numeral 55a denotes a drive control part of the electric assisting mechanism 55, which is disposed on the frame 50b. Reference numeral 56 denotes a drive shaft of an electric motor, which is disposed in the drive control part 55a, 57 denotes a pulley provided to penetrate through the end part of the drive shaft 56, 58 denotes a power transmission member stretched to be installed between the pulley 57 and the outer-rotating member 4, which transmits power of the electric motor to the chain ring 8, and 59 denotes a drive detection sensor for detecting operation of the power transmission member 58. Also, the electric assisting mechanism 55 may be simply attached and detached as necessary.

Since the operations of the rotation transmission mechanism for manpowered vehicle 1B according to Embodiment 3 are similar to those of the rotation transmission mechanism for manpowered vehicle 1 according to Embodiment 1, the description thereof is omitted.
As the chain ring 8 begins to rotate by an operator pedaling the pedals, the drive detection sensor 59 detects the motion of the power transmission member 58, the drive control part 55a drives an electric motor and may assist the rotation of the chain ring 8.

Since the rotation transmission mechanism for manpowered vehicle according to Embodiment 3 is constructed as described above, actions similar to those obtained by Embodiment 1 are brought about.

Since the bicycle provided with the rotation transmission mechanism for manpowered vehicle according to Embodiment 3 is constructed as described above, the following action is brought about in addition to those obtained by Embodiment 1. (1) Since the electric assisting mechanism 55 is concurrently used in the rotation transmission mechanism for manpowered vehicle 1B, load may be remarkably reduced not only at the beginning of pedaling but also in a steady running state, wherein the usability is excellent.

### (Embodiment 4)

A description is given of a wheelbarrow for civil construction work, etc., which is provided with a rotation transmission mechanism for manpowered vehicle, according to Embodiment 4 of the present invention with reference to the drawings.

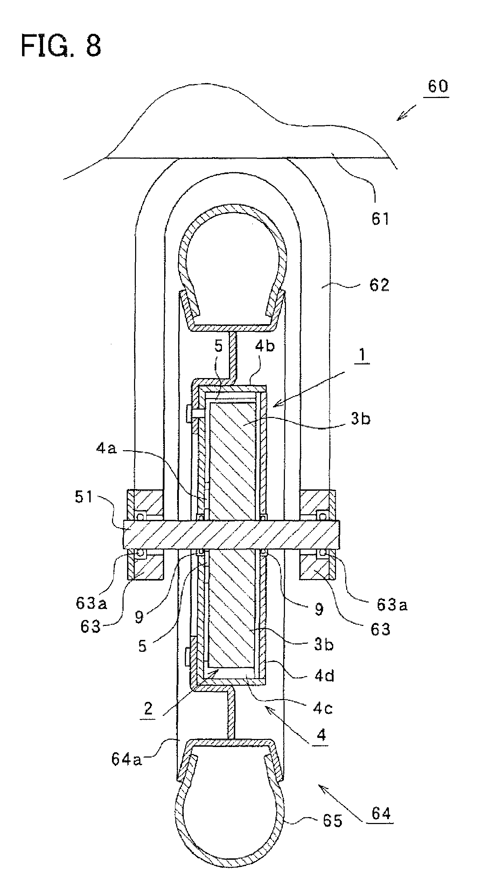

FIG. 8 is a sectional front view showing the major parts of a wheelbarrow for civil construction work, etc., which is provided with a rotation transmission mechanism for manpowered vehicle according to Embodiment 4. Components that are similar to those of Embodiment 1 are given the same reference numerals, and the description thereof is omitted.
In FIG. 8, reference numeral 60 denotes a wheelbarrow for civil construction work, which is provided with a rotation transmission mechanism for manpowered vehicle 1 similar to Embodiment 1, 61 denotes a bucket of a wheelbarrow for civil construction work 60, 62 denotes a frame acting as the main body of the wheelbarrow for civil construction work 60, 63 denotes a rotation shaft retaining part formed on the frame 62, 63a denotes a bearing for rotatably retaining the rotation shaft 51, on which the rotation transmission mechanism for manpowered vehicle 1 is disposed, on the rotation shaft retaining part 63, 64 denotes a wheel part disposed on the outer circumference of the outer-rotating member 4 of the rotation transmission mechanism for manpowered vehicle 1, and 64a denotes a rim of the wheel part 64, which is fixed on the outer circumference of the outer-rotating member 4 in order to attach a tire 65.

A description with respect to the operation of the rotation transmission mechanism for manpowered vehicle 1 according to Embodiment 4 is omitted, because the order of the rotation thereof is reversed in comparison with a case where the rotation transmission mechanism for manpowered vehicle 1 is used for a bicycle 50 as described in Embodiment 1 (Fig. 3, paragraph [0052]), the outer-rotating member 4 rotates first along with the tire 65 of the wheel part 64, and the rotation shaft 51 rotates later along with the inner-rotating member 2, and all the others are the same as in Embodiment 1.
Also, since the wheelbarrow for civil construction work, which is provided with a rotation transmission mechanism for manpowered vehicle, according to Embodiment 4 is constructed as described above, the following actions are brought about.
(1) Since the rotation transmission mechanism for manpowered vehicle 1 is disposed on the rotation shaft 51 rotatably retained on the rotation shaft retaining part 63, and the wheel part 64 is disposed on the outer circumference of the outer-rotating member 4 of the rotation transmission mechanism for manpowered vehicle 1, the resilient deformation part 5 is deformed while rotation of the outer-rotating member 4 rotating along with the wheel part 64 is transmitted to the rotation shaft 51 through the inner-rotating member 2 by moving the frame 62 (the main body) having the rotation shaft retaining part 63 forward and backward and rotating the wheel part 64, and impact energy brought about by a large load, etc., received from the ground surface at the beginning of motion or during running and excessive input energy may be reliably absorbed and accumulated, wherein it is possible not only to prevent the arms, legs and waist, etc., of a user from being subjected to a large load but also to convert the resilient energy accumulated in the resilient deformation part 5 to rotation energy without any loss by restoring the resilient deformation part 5 at positions where the input energy decreases or the input energy is discontinued. Therefore, the rotation force may be reliably and smoothly transmitted while suppressing fluctuation in torque, and the input energymaybe effectively utilized, wherein excellent acceleration and stability in running at a low speed may be brought about.
(2) Even when a user quickly starts up, quickly accelerates or climbs a steep uphill road, there is no case where knees and ankles, etc., are injured, by an impact absorbing effect of the rotation transmission mechanism for manpowered vehicle 1, and excellent stability in running is brought about, and a female, an elderly person, or a woman who rides with heavy goods or a child thereon may simply operate, wherein the stability in running at a low speed and handling are excellent.
(3) Since the resilient energy accumulated in the resilient deformation part 5 may be converted to rotation energy at positions where the input energy decreases or the input energy is discontinued, the propulsive force (rotation torque) is not discontinued, no wobbling is brought about at low-speed running, and stabilized running is enabled even when riding with heavy goods, wherein the usability is excellent.
(4) Since the resilient deformation part 5 is resiliently deformed in accordance with the running resistance resulting from acceleration, deceleration, and a change in the ground conditions, minute vibrations may be absorbed, wherein transmission of vibrations to a human body is suppressed, and fatigue of a user may be reduced.
(5) Since the resilient energy accumulated in the resilient deformation part 5 changes in accordance with the energy input externally, it is possible to transmit the rotation force in a state most suitable for physical strength of a user and the running conditions, wherein the versatility is excellent.
Also, where the resilient deformation part 5 is disposed at both side surface parts of the inner-circumferential projection part 4c, the load may be reduced even when moving the wheelbarrow for civil construction work 60 backwards, wherein the usability may be further improved. In addition, the rotation transmission mechanism for manpowered vehicle 1 may be incorporated in other manpowered vehicles such as a rickshaw, a carriage, a two-wheeled cart, a wheelchair, and similar effects are brought about.

### (Embodiment 5)

A description is given of a rotation transmission mechanism for manpowered vehicle according to Embodiment 5 of the present invention with reference to the drawing.

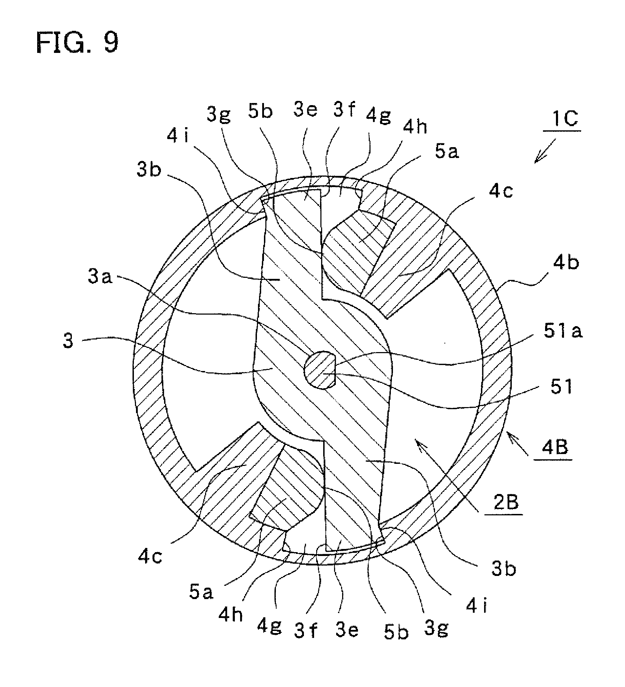

FIG. 9 is a sectional side elevational view showing the major parts of a rotation transmission mechanism for manpowered vehicle according to Embodiment 5. Also, components that are similar to those of Embodiment 1 are given the same reference numerals, and the description thereof is omitted.
In FIG. 9, a rotation transmission mechanism for manpowered vehicle 1C according to Embodiment 5 differs from Embodiment 1 in that the outer-circumferential projection part 3b of the inner-rotating member 2B and the inner-circumferential projection part 4c of the outer-rotating member 4B are, respectively, formed at two points, in that the contact surface 5b of the resilient deformation part 5a with the outer-circumferential projection part 3b is formed to spherically bulge, and in that a turn-retaining recessed part 4g for rotatably retaining the distal end parts 3e of the respective outer-circumferential projection part 3b in a fixed angular range is formed at the inner-circumferential side of the outer cylindrical part 4b of the outer-rotating member 4B.
In FIG. 9, reference numeral 3f denotes a forward side end surf ace of the outer-circumferential projection part 3b, 3g denotes a backward side end surface of the outer-circumferential projection part 3b, 4h denotes a forward side inner wall of the turn-retaining recessed part 4g, and 4i denotes a backward side inner wall of the turn-retaining recessed part 4g.

The operations of the rotation transmission mechanism for manpowered vehicle 1C according to Embodiment 5 are basically similar to those of the rotation transmission mechanism for manpowered vehicle 1 according to Embodiment 1. However, when the rotating shaft 51 and the outer-rotating member 4B relatively rotate so that the outer-circumferential projection part 3b and the inner-circumferential projection part 4c approach each other, the forward side end surface 3f at the distal end part 3e side of the outer-circumferential projection part 3b is brought into contact with the forward side inner wall 4h of the turn-retaining recessed part 4g at the stage when the rotation shaft 51 and the outer-rotating member 4B rotate only by a fixed angle. Therefore, rotation may be directly transmitted from the outer-circumferential projection part 3b to the outer-rotating member 4B.
Further, by the backward side end surface 3g of the outer-circumferential projection part 3b being brought into contact with the backward side inner wall 4i of the turn-retaining recessed part 4g, it is possible to prevent the rotation shaft 51 and the outer-rotating member 4B from idling in the reverse direction.
Also, the length of the turn-retaining recessed part 4g may be appropriately selected in accordance with a permissible rotating angle.

Since the rotation transmission mechanism for manpowered vehicle according to Embodiment 5 is constructed as described above, the following action is brought about in addition to the actions similar to those obtained by Embodiment 1.
(1) Since the outer-rotating member 4B is provided with a turn-retaining recessed part 4g which is formed at the inner-circumferential side of the outer cylindrical part 4b and rotatably retains the distal end part 3e at the outer-circumferential side of the outer-circumferential projection part 3b of the inner-rotating member 2B in a fixed angular range, relative rotation between the outer-rotating member 4B and the inner-rotating member 2B may be stopped with the outer-circumferential projection part 3b of the inner-rotating member 2B fixed at the stage when the rotation shaft 51 or the outer-rotating member 4B rotates by a predetermined fixed angle, wherein the rotation shaft 51, the inner-rotating member 2B and the outer-rotating member 4B are caused to integrally rotate, and the rotation force may be reliably transmitted. Unevenness in the shape and physical properties of the resilient deformation part 5a may be absorbed, and excellent motion stability may be brought about.

### (Embodiment 6)

A description is given of a rotation transmission mechanism for manpowered vehicle according to Embodiment 6 of the present invention with reference to the drawings.

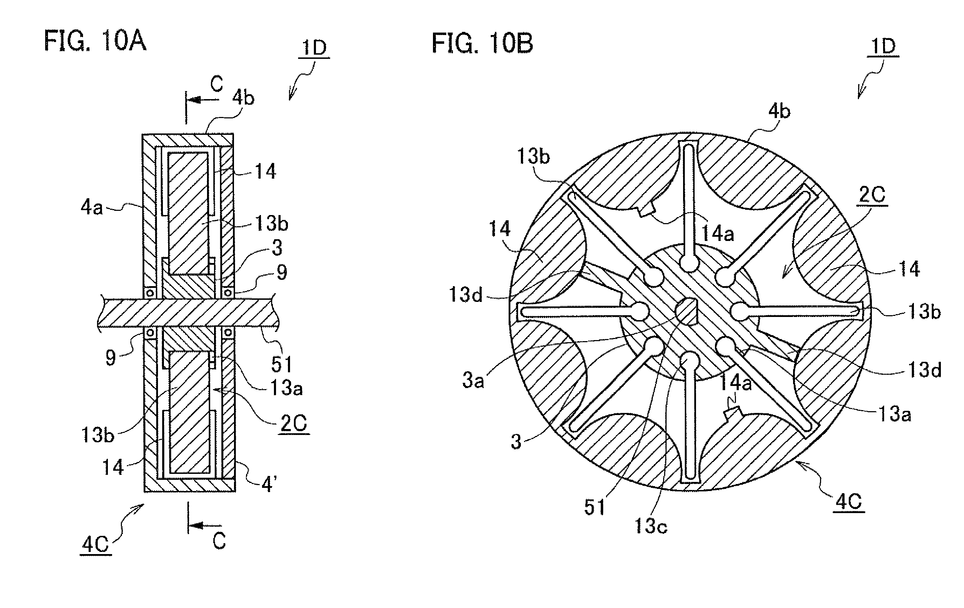

FIG. 10A is a sectional plan view showing the major parts of a rotation transmission mechanism for manpowered vehicle according to Embodiment 6, and FIG. 10B is a sectional view taken along the arrow C-C of FIG. 10A. Components that are similar to those of Embodiment 1 are given the same reference numerals, and the description thereof is omitted.
In FIG. 10, a rotation transmission mechanism for manpowered vehicle 1D according to Embodiment 6 differs from Embodiment 1 in that the outer-circumferential projection part 13b of the inner-rotating member 2C is formed of a resilient body using a plate spring, in that the rotation transmission mechanism for manpowered vehicle 1D is provided with two idling prevention projections 13d projecting on the outer circumference of the outer-circumferential projection part fixing part 3, and in that the inner-circumferential projection part 14 of the outer-rotating member 4C is formed of a rigid member to be semi-circular, and a stopper part 14a is projecting at the end surface part at the inner-circumferential side of the inner-circumferential projection parts 14 at two points.
In FIG. 10, reference numeral 13a denotes a fixing groove radially formed on the outer circumference of the outer-circumferential projection part fixing part 3, in which the root side of the outer-circumferential projection part 13b is inserted and fixed, and 13c denotes a fixing projection part formed at the end part at the root side of the outer-circumferential projection part 13b, the section of which is substantially circular, and which prevents the outer-circumferential projection part 13b from falling out.

By forming the inner-circumferential projection part 14 to be semi-circular, the outer-circumferential projection part 13b formed of a plate spring is easily deformed along the arc-shaped end surface of the inner-circumferential projection part 14, wherein it is possible to prevent the outer-circumferential projection part 13b from being damaged, and excellent motion stability is brought about. Also, a gap is provided between the outer cover member 4' and the outer-circumferential projection part 13b so that deformation of the outer-circumferential projection part 13b is not restricted by the outer cover member 4'.
Only by inserting the root side of the outer-circumferential projection part 13b in the fixing groove 13a, the outer-circumferential projection part 13b may be simply fixed at the outer-circumferential projection part fixing part 3, and the outer-circumferential projection part 13b may be easily attached and detached, wherein the mass production efficiency and maintenance efficiency are excellent. In addition, the outer-circumferential projection part 13b is prevented from falling out from the fixing groove 13a by means of the fixing projection part 13c, wherein the fixing stability is excellent.

A description is given of operations of the rotation transmission mechanism for manpowered vehicle according to Embodiment 6, which is constructed as described above.
In FIG. 10, as the inner-rotating member 2C or the outer-rotating member 4C rotates, the outer-circumferential projection part 13b which is a resilient body is deformed so as to be curved.
Although the outer-circumferential projection part 13b is resiliently deformed at the beginning of rotation of the inner-rotating member 2C or the outer-rotating member 4C, the outer-rotating member 4C rotates substantially in an integrated manner with the rotation shaft 51 and the inner-rotating member 2C after being deformed, and rotation may be reliably transmitted between the rotation shaft 51 and the outer-rotating member 4C.
In addition, when input of a force is discontinued, the outer-circumferential projection part 13b is restored, and the energy accumulated therein is converted to a rotation force and may be used as a propulsive force.
Further, a plurality of outer-circumferential projection parts 13b are provided. Therefore, if a part of outer-circumferential projection parts 13b is damaged and the impact absorbing force is lowered, rotation may be transmitted by the remaining outer-circumferential projection parts 13b. Also, where all of the outer-circumferential projection parts 13b are damaged, although an impact may not be absorbed, the rotation may be transmitted by the stopper part 14a being brought into contact with the idling prevention projection 13d, wherein there is no case where running becomes impossible. It is sufficient if at least one or more stopper part 14a and one or more idling prevention projection 13d are provided, respectively. The number and arrangement spacing (angle) there of may be appropriately selected. Where a plurality of stopper parts 14a and a plurality of idling prevention projections 13d are provided, the rotation may be transmitteduntil all of the stopper parts 14a and idling prevention projections 13d are damaged. Therefore, the reliability in motion may be further increased.
Further, in the present embodiment, although the outer-circumferential projection part 13b of the inner-rotating member 2C is formed of a resilient body (plate spring) and the inner-circumferential projection part 14 of the outer-rotating member 4C is formed of a rigid member, the outer-circumferential projection part 13b may be formed of a rigid member and the inner-circumferential projection part 14 may be formed of a resilient body (plate spring).

Since the rotation transmission mechanism for manpowered vehicle according to Embodiment 6 is constructed as described above, the following actions are brought about.
(1) The rotation transmission mechanism for manpowered vehicle is provided with an inner-rotating member 2C having a plurality of outer-circumferential projection parts 13b fixed on the outer circumference of the rotation shaft 51 and projecting to the outer-circumferential side of the rotation shaft 51; and the outer-rotating member 4C having the side plate part 4a rotatably inserted to the rotation shaft 51 at the position of the inner-rotating member 2C, the outer cylindrical part 4b erected on the outer circumference of the side plate part 4a concentrically with the rotation shaft 51 outside the outer-circumferential projection part 13b of the inner-rotating member 2C, and a plurality of the inner-circumferential projection parts 14 projecting at the inner-circumferential side of the outer cylindrical part 4b and alternately disposed by the outer-circumferential projection parts 13b of the inner-rotating member 2C, wherein the outer-circumferential projection parts 13b of the inner-rotating member 2C are formed of a resilient body. Therefore, when the rotation shaft 51 or the outer-rotating member 4C are rotated by manpower, and while the rotation is transmitted to the outer-rotating member 4C or the rotation shaft 51, the outer-circumferential projection part 13b formed of a resilient body is resiliently deformed, impact energy brought about by a large load, etc. , received from the ground surface at the beginning of motion or during running and excessive input energy may be reliably absorbed and accumulated as resilient energy, wherein the load onto a human body may be remarkably reduced, and the usability is excellent.
(2) Since the outer-circumferential projection parts 13b of the inner-rotating member 2C and the inner-circumferential projection parts 14 of the outer-rotating member 4C are alternately disposed, the outer-circumferential projection parts 13b formed of a resilient body may be reliably resiliently deformed when the inner-rotating member 2C and the outer-rotating member 4C relatively rotate, and a part of the input energymay be efficiently accumulated. After the deformation of the resilient body (the outer-circumferential projection parts 13b), the rotation shaft 51, the inner-rotating member 2C and the outer-rotating member 4C rotate substantially in an integrated manner, the rotation force may be reliably transmitted, and the resilient energy accumulated in the resilient body (the outer-circumferential projection parts 13b) may be converted to rotation energy without any loss when the resilient body (the outer-circumferential projection parts 13b) is restored when the input energy is decreased or discontinued, and may be effectively utilized as a propulsive force, wherein there is no loss in the input energy, and reliability in motion and efficiency in energy use are excellent.
(3) Since the side plate part 4a of the outer-rotating member 4C is rotatably inserted to the rotation shaft 51, a friction force is hard to bring about between the rotation shaft 51 and the outer-rotating member 4C, and the inner-rotating member 2C and the outer-rotating member 4C are caused to relatively rotate, wherein deformation and restoration of the resilient body (the outer-circumferential projection parts 13b) are reliably repeated, the rotation shaft 51 may be smoothly rotated. Therefore, excellent stability is brought about in regard to rotation transmission, and excellent efficiency is brought about.
(4) Since the torque may be supplemented by the restoration energy of the resilient body (the outer-circumferential projection parts 13b) when the input energy is decreased or discontinued, the rotation may be stabilized by reducing fluctuation in the output energy.
(5) Since the inner-rotating member 2C is provided with the outer-circumferential projection part fixing part 3 having a rotation shaft insertion hole 3b in which the rotation shaft 51 is inserted and fixed, and the outer-circumferential projection parts 13b are disposed on the outer circumference of the outer-circumferential projection part fixing part 3, the outer-circumferential projection parts 13b may be integrally handled by the outer-circumferential projection part fixing part 3 even when provided in a plurality, wherein the inner-rotating member 2C may be easily attached to and detached from the rotation shaft 51, excellent workability is secured in regard to assembling and disassembling, and excellent maintenance efficiency is brought about.
(6) Since a plurality of outer-circumferential projection parts 13b of the inner-rotating member 2C and a plurality of inner-circumferential projection parts 14 of the outer-rotating member 4C are radially disposed at the outer-circumferential side of the rotation shaft 51 and at the inner-circumferential side of the outer cylindrical part 4b of the outer-rotating member 4C, respectively, the outer-circumferential projection parts 13b and the inner-circumferential projection parts 14 may be disposed so as to be meshed with each other, and the load given to the rotation shaft 51, the outer-circumferential projection parts 13c and the inner-circumferential projection parts 14, etc. , maybe dispersed, wherein excellent durability is secured, and a substantially fixed rotation force may be transmitted at all times by actuating a restoring force in accordance with an input state externally regardless of the rotation position. Therefore, excellent motion stability is brought about.
(7) The outer-rotating member 4C has the inner-circumferential projection parts 14 formed of a rigid member and a stopper part 14a projecting at the end surface part at the inner-circumferential side of two inner-circumferential projection parts 14, and the inner-rotating member 2C is provided with two idling prevention projections 13d projecting on the outer circumference of the outer-circumferential projection part fixing part 3 and brought into contact with the stopper part 14a when the inner-rotating member 2C and the outer-rotating member 4C relatively rotate over a set angle. Therefore, even when the outer-circumferential projection part 13b is damaged, the stopper part 14a and the idling prevention projection 13d are brought into contact with each other at the stage when the rotation shaft 51 or the outer-rotating member 4C rotate only by a predetermined angle, thereby stopping relative rotation of the outer-rotating member 4C and the inner-rotating member 2C, wherein the rotation shaft 51, the inner-rotating member 2C and the outer-rotating member 4C are caused to integrally rotate, and the rotation force may be reliably transmitted. Therefore, excellent stability is brought about in regard to motion.
(8) Even in a case where the outer-circumferential projection part 13b and the inner-circumferential projection part 14 are damaged, the rotation force may be continuously transmitted without any discontinuation by the stopper part 14a being brought into contact with the idling prevention projection 13d, wherein excellent motion stability and reliability are brought about.
(9) Since the outer-circumferential projection part 13b is formed of a resilient body, it is not necessary to provide a resilient deformation part separately, wherein the number of components may be reduced, and the mass production efficiency may be improved.

### (Embodiment 7)

A description is given of a rotation transmission mechanism for manpowered vehicle according to Embodiment 7 of the present invention with reference to the drawing.

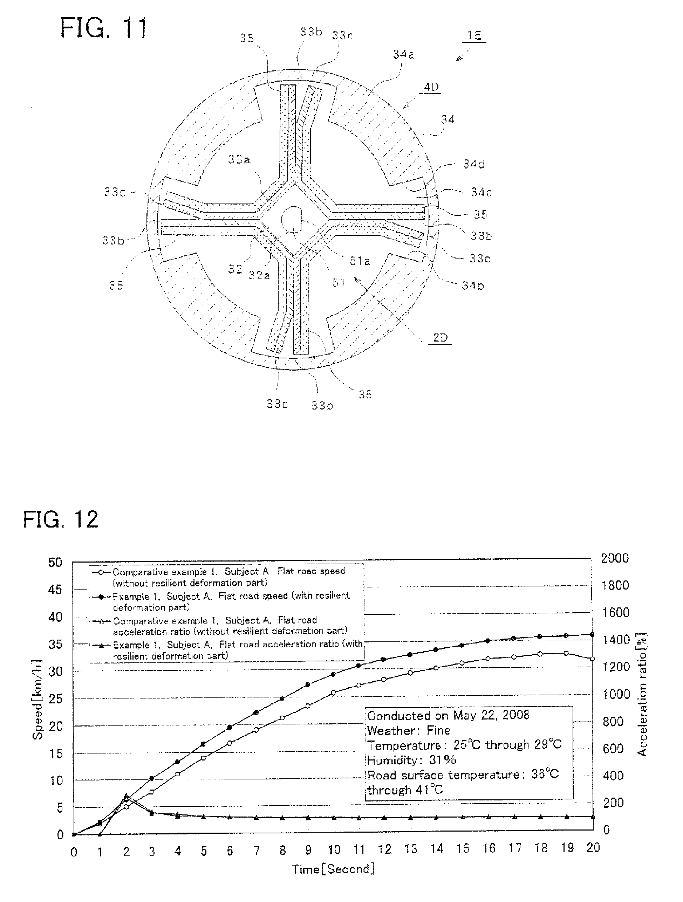

FIG. 11 is a sectional side elevational view showing the major parts of a rotation transmission mechanism for manpowered vehicle according to Embodiment 7. Also, components that are similar to those of Embodiment 1 are given the same reference numerals, and the description thereof is omitted.
In FIG. 11, reference numeral 1E denotes a rotation transmission mechanism for manpowered vehicle according to Embodiment 7, 32 denotes an outer-circumferential projection part fixing part of the inner-rotating member 2D, the shape of which is formed to be rectangular, and which is fixed at the rotation shaft 51, 32a denotes a rotation shaft insertion hole through which the rotation shaft 51 is inserted and is fixed at the outer-circumferential projection part fixing part 32, 33b denotes four outer-circumferential projection parts of the inner-rotating member 2D, which are formed of a metal-made plate material such as steel, fixed at respective sides of the outer-circumferential projection part fixing part 32 with the base parts 33a and are disposed so as to project to the outer circumference of the rotation shaft 51, 33c denotes a plate spring-shaped resilient deformation part extending from and fixed at the base part 33a of one outer-circumferential projection part 33b and fixed at one side surface part of the other adjacent outer-circumferential projection part 33b at the root side, and 34 denotes an outer cylindrical part of the outer-rotatingmember 4D, which is inserted to the outside of the outer-circumferential projection part 33b concentrically with the rotation shaft 51. Reference numeral 34a denotes four inner-circumferential projection parts of the outer-rotating member 4D, which are integrally projecting to the inner-circumferential side of the outer cylindrical part 34, 34b denotes a contact surface of the inner-circumferential projection part 34a with the resilient deformation part 33c, 34c denotes a turn-retaining recessed part which is formed between adjacent inner-circumferential projection parts 34a of the outer cylindrical part 34 and rotatably retains the outer-circumferential projection part 33b and the distal end part of the resilient deformation part 33c in a fixed angular range, 34d denotes a backward side inner wall of the turn-retaining recessed part 34c. Reference numeral 35 denotes a resilient damper part made of synthetic rubber or synthetic resin, which is adhered to the surface of the base part 33a, the outer-circumferential projection part 33b and the resilient deformation part 33c.

The rotation transmission mechanism for manpowered vehicle 1E according to Embodiment 7 differs from Embodiments 1 through 6 in that the resilient deformation part 33c disposed at the side surface part between one outer-circumferential projection part 33b and the other adjacent outer-circumferential projection part 33b is formed of a single plate material. Therefore, the outer-circumferential projection part 33b and the resilient deformation part 33c may be formed only by adhering two plate materials of the same quality to each other, wherein the mass production efficiency is excellent. In addition, since the resilient deformation part 33c is made of a plate spring, the repulsive force after resilient deformation may be increased, and the propulsive force generated in restoration may be increased, wherein excellent efficiency is brought about in regard to transmission of rotation force. Further, the resilient deformation part 33c may be formed by stacking up two plate springs.
Since the resilient damper part 35 is adhered to the surface of the outer-circumferential proj section part 33b and the resilient deformation part 33c, the outer-circumferential projection part 33b and the resilient deformation part 33c may be prevented from being brought into direct contact with the contact surface 34b of the backward side inner wall 34d of the turn-retaining recessed part 34c and the inner-circumferential projection part 34a, wherein it is possible to prevent noise from being generated when rotating normally or reversely. Further, since the resilient damper part 35 at the resilient deformation part 33c side is resiliently deformed, the cushioning effect and repulsive performance may be further increased, wherein it is attempted that the load onto a user is reduced, and the propulsive force is increased. In addition, it is not necessary that the resilient damper part 35 is provided on the entire surface of the base part 33a, the outer-circumferential projection part 33b and the resilient deformation part 33c. It is sufficient that the resilient damper part 35 is provided on the contact surface 34b where the outer-circumferential projection part 33b and the resilient deformation part 33c are brought into contact with at least the inner-circumferential projection part 34a or at the position where the turn-retaining recessed part 34c is brought into contact with the backward side inner wall 34d. The resilient damper part 35 may be disposed on the contact surface 34b of the inner-circumferential projection part 34a and on the backward side inner wall 34d of the turn-retaining recessed part 34c instead of being disposed at the outer-circumferential projection part 33b and the resilient deformation part 33c.

A description is given of operations of the rotation transmission mechanism for manpowered vehicle according to Embodiment 7, which is constructed as described above.
In FIG. 11, as the rotation shaft 51 or the outer-rotating member 4D rotates, the resilient deformation part 33c and the resilient damper part 35, which are placed between the outer-circumferential projection part 33b and the inner-circumferential projection part 34a, are resiliently deformed.
The resilient deformation part 33c is resiliently deformed at the beginning of rotation of the rotation shaft 51 or the outer-rotating member 4D. However, after being deformed, the rotation shaft 51 and the outer-rotating member 4D rotates substantially in an integrated manner, wherein rotations may be reliably transmitted between the rotation shaft 51 and the outer-rotating member 4D.
Also, the shapes of the outer-circumferential projection part 33b and the inner-circumferential projection part 34a are not restricted thereto, and may be appropriately selected. In addition, the resilient damper part 35 may be provided at the outer-circumferential projection part and the inner-circumferential projection part, which are described in Embodiments 1 through 6.

Since the rotation transmission mechanism for manpowered vehicle according to Embodiment 7 is constructed as described above, actions that are similar to those of Embodiment 5 may be brought about.

A rotation transmission mechanism for manpowered vehicle according to Embodiments 1 through 7 may be incorporated in and used for not only a bicycle and a wheelbarrow for civil construction work, which are described above, but also various manpowered vehicles such as a carriage, a two-wheeled cart, a monocycle, a tricycle for a child, and a wheelchair, etc.
Therefore, a manpowered vehicle provided with a rotation transmission mechanism for manpowered vehicle according to Embodiments 1 through 7 brings about the following actions.
(1) A rotation transmission mechanism for manpowered vehicle is disposed on a rotation shaft rotatably retained on the rotation shaft retaining part of the manpowered vehicle, and a wheel part is disposed on the outer circumference of the outer-rotating member of the rotation transmission mechanism for manpowered vehicle. Therefore, the wheel part is rotated by moving the main body having the rotation shaft retaining part forward and backward, and the rotation shaft is rotated by the left and right crank arms, etc., linked with the rotation shaft, whereby the resilient deformation part or the resilient body of the rotation transmission mechanism for manpowered vehicle is deformed while rotation of the outer-rotating member rotating along with the wheel part is transmitted to the rotation shaft through the inner-rotatingmember or while rotation of the inner-rotating member rotating along with the rotation shaft is transmitted to the wheel part via the outer-rotating member, and impact energy brought about by a large load, etc. , received from the ground surface at the beginning of motion or during running and excessive input energy may be reliably absorbed and accumulated. Accordingly, not only is it possible to prevent the knees, ankles, and waist, etc., of a user from being subjected to any large load, but also the resilient energy accumulated in the resilient deformation part or the resilient body may be converted to rotation energy without any loss by restoring the resilient deformation part, or the outer-circumferential projection part or inner-circumferential projection part formed of a resilient body at positions where the input energy is reduced or the input energy is discontinued. Therefore, a rotation force may be reliably and smoothly transmitted while suppressing fluctuation in torque, wherein the input energy may be effectively utilized, and the acceleration and stability in running at a low speed are excellent.
(2) There is no case where knees and ankles, etc., are injured by virtue of an impact absorbing effect of the rotation transmission mechanism for manpowered vehicle even if a user quickly starts up, quickly accelerates or climbs a steep uphill road. Excellent stability in running is secured. A female, an elderly person, or a woman who rides with heavy goods or a child thereon may easily operate, and everyone from a child to an adult may use the bicycle not only as a daily necessity but also for various uses such as competition and rehabilitation by improving acceleration, uniformity in rotation torque, and stability in running at a low speed. That is, excellent versatility and handling are brought about.
(3) Since the resilient energy accumulated in the resilient deformation part or the resilient bodymaybe converted to a rotation energy at positions where the input energy decreases or the input energy is discontinued, the propulsive force (rotation torque) is not discontinued, no wobbling is brought about at a low-speed running, wherein stabilized running is enabled even when riding with a heavy goods or a child, and excellent usability is brought about.
(4) Since the resilient deformation part or the resilient body is resiliently deformed in accordance with a running resistance resulting from acceleration or deceleration and a change in the ground conditions, minute vibrations may be absorbed, wherein transmission of vibrations to the human body is suppressed, and fatigue of a user may be reduced.
(5) Since the resilient energy accumulated in the resilient deformation part or the resilient body may change in accordance with energy input externally, it is possible to transmit a rotation force in a state most suitable for the health condition, physical strength of an operator and the running conditions, wherein the versatility is excellent.

### Examples

Hereinafter, a detailed description is given of the present invention based on examples.
With respect to a case (Refer to FIG. 1 through FIG. 3) in which a rotation transmission mechanism for manpowered vehicle 1, which has been described in Embodiment 1, is incorporated in the crank part of a bicycle, experiments for checking influences for which the presence or absence of a gradient on a road surface, and differences in the physical strength (age, weight and exercise history, etc.) of a subject exert onto the running speed and acceleration ratio have been carried out.

### (Example 1)

The speed has been calculated based on positional information per second of GPS (Global Positioning System, GPSmap manufactured by GARMIN Ltd. 60CSx) in regard to a case where a subject A (Male aged 55 years old, weight: 80Kg, who has no continuous exercise history, and does not use a bicycle daily) rides on a bicycle having a rotation transmission mechanism for manpowered vehicle 1 similar to Embodiment 1 incorporated therein and runs on a asphalt-paved flat road.
Also, the acceleration ratio was calculated by dividing the speed at specified time by the speed of one second ago.
An ordinary bicycle (fixed-up second-hand bicycle) was used, which has 27-inch tires in regard to the tire standard, the pneumatic pressure thereof being 414kPa (=60psi), the self-weight being 17kg, the distance between the wheel shaft being 108cm, the distance between the crankshaft and the rear shaft being 45cm, the distance between the crankshaft and the ground surface being 33cm, the distance between the front axis or the rear axis and the ground surface being 36cm, and the gear ratio being 2.29.
Butyl rubber (Repulsive resiliency ratio 75% through 90%, and static spring constant 10N/mm through 25N/mm) was used for the resilient deformation part 5 of the rotation transmission mechanism for manpowered vehicle 1.

### (Example 2)

All the conditions are the same as those in Example 1, excepting that the subject A rides the same bicycle on an uphill asphalt-paved road, the gradient of which is 8%, instead of the flat road.
The gradient of the road surface was calculated based on the measurement result by GPS.

### (Example 3)

All the conditions are the same as those of Example 1, excepting that a subject B (Male aged 36 years old, weight being 63kg, who has continuous exercise history and uses a bicycle daily or as a sport) rides on the same bicycle instead of the subject A.

### (Example 4)

All the conditions are the same as those in Example 2, excepting that the subject B rides on the same bicycle instead of the subject A.

### (Comparative Examples 1 through 4)

The comparative examples have been conducted under the same conditions as the respective examples 1 through 4, excepting that the resilient deformation part 5 of the rotation transmission mechanism for manpowered vehicle 1 was removed.

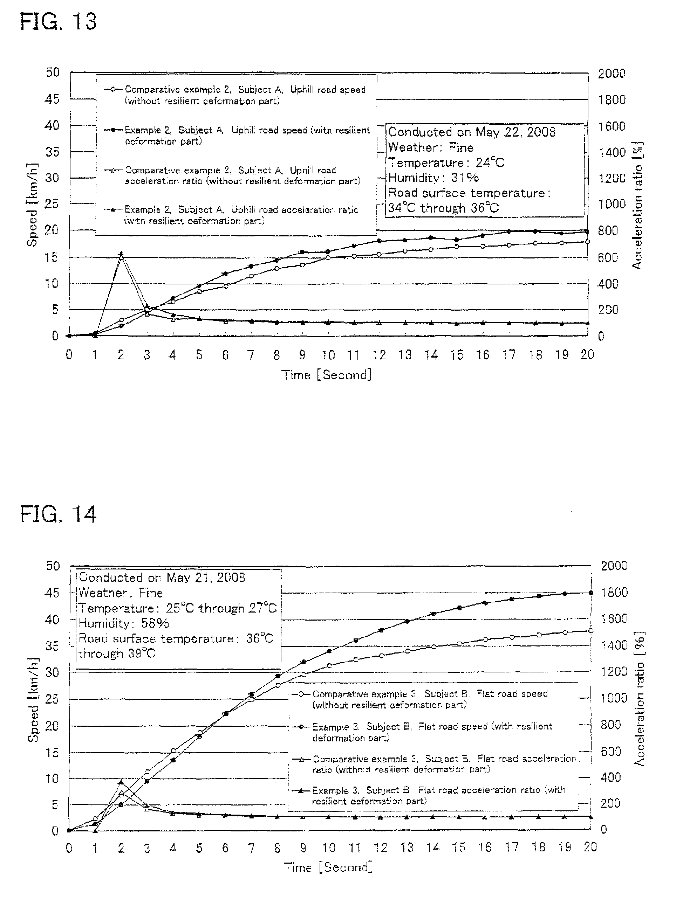

FIG. 12 through FIG. 15 are views showing changes with time with respect to the speed and acceleration ratios in Examples 1 through 4 and Comparative Examples 1 through 4. In FIG. 12 through FIG. 15, the abscissa axis shows time, the first ordinate axis at the left side shows speed, and the second ordinate axis at the right side shows acceleration ratios.
First, subject A is taken into consideration.
In FIG. 12, on a flat road, the speed of Example 1 (in which the resilient deformation part is provided) exceeds the speed of Comparative Example 1 (not having the resilient deformation part) from the beginning of pedaling to the end thereof. Also, during two through four seconds from the beginning of pedaling, the acceleration ratio of Example 1 exceeds the acceleration ratio of Comparative Example 1.
Next, in FIG. 13, the speed of Comparative Example 2 (not having the resilient deformation part) exceeds the speed of Example 2 (having the resilient deformation part) during three seconds at the beginning of pedaling on an uphill road. However, after that, the speeds are reversed, and the speed of Example 2 exceeds the speed of Comparative Example 2. In addition, during two through six seconds at the beginning of pedaling, the acceleration ratio of Example 2 exceeds the acceleration ratio of Comparative Example 2.
Based thereon, in Examples 1 and 2, the load may be reduced to improve the acceleration based on an action of the resilient deformation part 5 regardless of a gradient, and it is understood that running at a faster speed than in Comparative Examples 1 and 2 is enabled. In particular, in a case of an uphill road according to Example 2, a remarkable effect may be observed.
Usually, the load in running is further increased where running on an uphill road than where running on a flat road. A person like subj ect A, who is heavy in weight and is poor in physical strength (that is, does not exercise daily), is subjected to greater influences and his running speed is lowered. At this time, in Example 2 (having the resilient deformation part), since the resilient deformation part 5 is compressed at the beginning of pedaling, the input energy is not transmitted from the rotation shaft 51 to the chain ring 8 soon, wherein the initial speed becomes still slower than in Comparative Example 2 (not having the resilient deformation part). However, the slowdown is supplemented by improvement in the acceleration ratio in accordance with a reduction in the load. Resultantly, it may be considered that running at a higher speed than in Comparative Example 2 is enabled.

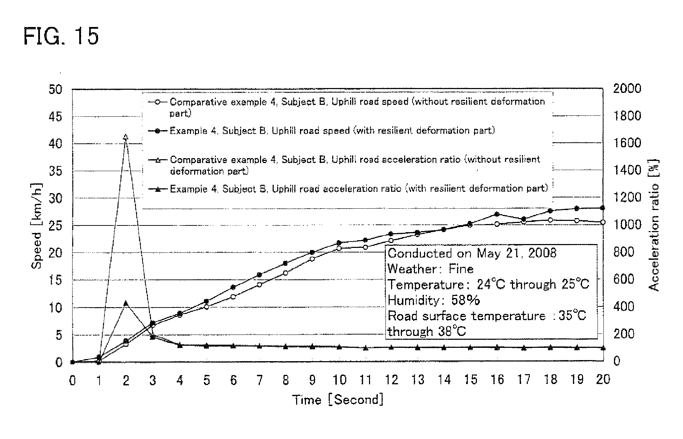

Next, subject B is taken into consideration.
First, in FIG. 14, although the speed of Comparative Example 3 (not having the resilient deformation part) exceeds the speed of Example 3 (having the resilient deformation part) during five seconds at the beginning of pedaling on a flat road, the speeds are reversed after that, and the speed of Example 3 greatly exceeds the speed of Comparative Example 3. Also, the acceleration ratio of Example 3 greatly exceeds the acceleration ratio of Comparative Example 3 during two through five seconds at the beginning of pedaling, and the acceleration ratio of Example 3 exceeds the acceleration ratio of Comparative Example 3 until the acceleration ratios thereof are almost balanced in ten seconds.
Next, in FIG. 15, the speed of Example 4 (having the resilient deformation part) exceeds the speed of Comparative Example 4 (not having the resilient deformation part) on an uphill road from the beginning of pedaling to the end thereof. Also, the acceleration ratio of Example 4 exceeds the acceleration ratio of Comparative Example 4 during two through four seconds at the beginning of pedaling.
Based thereon, in Examples 3 and 4, the load may be reduced to improve the acceleration based on an action of the resilient deformation part 5 regardless of a gradient, and it is understood that running at a faster speed than in Comparative Examples 3 and 4 is enabled. In particular, in a case of a flat road according to Example 3, a remarkable effect may be observed.
Where a person like subject B, who is light in weight and good in physical strength (that is, exercises daily), rides a bicycle on a flat road where high speed running is easily enabled, since the acceleration effect of the rotation transmission mechanism for manpowered vehicle 1 may be sufficiently utilized, it may be considered that a great difference is brought about between Example 3 and Comparative Example 3.
In addition, although the load is further increased where running on an uphill road than where running on a flat road, a person like subject B, who is light in weight and good in physical strength (that is, exercises daily), is hardly influenced. Therefore, it may be considered that such a remarkable effect as may be observed between Example 2 and Comparative Example 2 in regard to subject A may not be observed between Example 4 and Comparative Example 4.

As described above, although differences in the output and degree of the effects of the rotation transmission mechanism for manpowered vehicle 1 are brought about in accordance with differences in the weight and physical strength, etc.., of subjects, Examples 1 through 4 bring an effect of the speeds thereof exceeding the speeds of Comparative Examples 1 through 4, wherein an effect of improving the acceleration by the rotation transmission mechanism for manpowered vehicle 1 may be confirmed.
Further, in the present experiments, regardless of that the experiments of Examples 1 through 4 (having the resilient deformation part) have been carried out in a physically worn-out state after subjects A and B were subjected to the experiments of Comparative Examples 1 through 4 (not having the resilient deformation part), the speeds of Examples 1 through 4 exceeded the speeds of Comparative Examples 1 through 4. Based thereon, it may be understood that the rotation transmission mechanism for manpowered vehicle 1 has an excellent acceleration effect. In addition, the subjects A and B have pedaled the pedals of the bicycles equally in Examples 1 through 4 and Comparative Examples 1 through 4. The subjects A and B had such an impression of feeling lighter in regard to pedaling, and physical sensation that the crank further smoothly rotates, and accelerated in a shorter time in Examples 1 through 4 than in Comparative Examples 1 through 4.

### Industrial Applicability

The present invention provides a rotation transmission mechanism for manpowered vehicle which, by disposing the same on the rotation shaft of a manpowered vehicle such as a bicycle, a wheelbarrow for civil construction work, or a two-wheeled cart that runs by rotating its wheel by manpower, is capable of reliably absorbing and accumulating impact energy brought about by a large load, etc., received externally at the beginning of motion, such as at startup, acceleration, and climbing an uphill road and during running and excessive input energy, remarkably reducing the load onto a human body, effectively utilizing the accumulated energy for rotations of the rotation shaft without any loss when the input energy is decreased or discontinued, is excellent in reliability and efficiency of rotation transmission, is capable of achieving a reduction in weight with a simplified structure having a fewer number of components, is easy in assembling and disassembling and has excellent maintenance efficiency, may be simply incorporated in a manpowered vehicle such as an existing bicycle, wheelbarrow for civil construction work, two-wheeled cart, wheelchair, and is excellent in mass production efficiency, assembling work efficiency, space-saving, and versatility, and provides a manpowered vehicle such as a bicycle having excellent motion stability and excellent handling, which, by being provided with the same, does not require any complicated operation, is capable of reducing the load given to the knees and ankles, etc., of a user, may be easily operated by a female, an elderly person, or a woman who rides with heavy goods or a child thereon, and may be used not only as a daily necessity, but also for rehabilitation and competition with excellent acceleration, excellent uniformity in rotation torque, and excellent stability in running at a low speed, wherein usability of a manpowered vehicle such as a bicycle, a wheelbarrow for civil construction work, a two-wheeled cart, may be increased.

## Claims

1. A rotation transmission mechanism for manpowered vehicle, comprising: an inner-rotating member having one or more outer-circumferential projection parts formed to be integral with a rotation shaft and projecting to the outer-circumferential side of the rotation shaft or one or more outer-circumferential projection parts fixed on the outer circumference of the rotation shaft and projecting to the outer-circumferential side of the rotation shaft; an outer-rotating member having a side plate part rotatably inserted to the rotation shaft at the position of the inner-rotating member, an outer cylindrical part erected on the outer circumference of the side plate part concentrically with the rotation shaft outside the outer-circumferential projection part of the inner-rotating member, and one or more inner-circumferential projection parts projecting at the side plate part and/or the outer cylindrical part at the inner-circumferential side of the outer cylindrical part and alternately disposed by the outer-circumferential projection part of the inner-rotatingmember; and one or more resilient deformation parts disposed between the outer-circumferential projection part of the inner-rotating member and the inner-circumferential projection part of the outer-rotating member.

2. The rotation transmission mechanism for manpowered vehicle according to Claim 1, wherein the inner-rotating member includes an outer-circumferential projection part fixing part having a rotation shaft insertion hole in which the rotation shaft is inserted and fixed, and a cover part disposed opposite to the side plate part of the outer-rotating member, and the outer-circumferential projection part is disposed on the outer circumference of the outer-circumferential projection part fixing part.

3. The rotation transmission mechanism for manpowered vehicle according to Claim 1 or 2, wherein the resilient deformation part is disposed or fixed at either one of both the side surface parts of the outer-circumferential projection parts or the inner-circumferential projection parts so that the resilient deformation part is placed between the respective outer-circumferential projection parts of the inner-rotating member and the respective inner-circumferential projection parts of the outer-rotating member when the rotation shaft or the outer-rotating member rotates.

4. The rotation transmission mechanism for manpowered vehicle according to any one of Claims 1 through 3, wherein the outer-circumferential projection part of the inner-rotating member or the inner-circumferential projection part of the outer-rotating member has a contact surface formed to be curved or wave-like, which is brought into contact with the resilient deformation part, or the resilient deformation part has a contact surface formed to be curved or wave-like, which is brought into contact with the outer-circumferential projection part of the inner-rotating member or the inner-circumferential projection part of the outer-rotating member.

5. The rotation transmission mechanism for manpowered vehicle according to any one of Claims 1 through 4, wherein the outer-rotating member includes a turn-retaining recessed part which is formed at the inner-circumferential side of the outer cylindrical part and rotatably retains the distal end part at the outer-circumferential side of the outer-circumferential projection part of the inner-rotating member in a fixed angular range.

6. A rotation transmission mechanism for manpowered vehicle, comprising: an inner-rotating member having one or more outer-circumferential projection parts formed to be integral with a rotation shaft and projecting to the outer-circumferential side of the rotation shaft or one or more outer-circumferential projection parts fixed on the outer circumference of the rotation shaft and projecting to the outer-circumferential side of the rotation shaft; and an outer-rotating member having a side plate part rotatably inserted to the rotation shaft at the position of the inner-rotating member, an outer cylindrical part erected on the outer circumference of the side plate part concentrically with the rotation shaft outside the outer-circumferential projection part of the inner-rotating member, and one or more inner-circumferential projection parts projecting at the inner-circumferential side of the outer cylindrical part and alternately disposed by the outer-circumferential projection part of the inner-rotating member; wherein at least either one of the outer-circumferential projection part of the inner-rotating member or the inner-circumferential projection part of the outer-rotating member is formed of a resilient body.

7. The rotation transmission mechanism for manpowered vehicle according to Claim 6, wherein the inner-rotating member has an outer-circumferential projection part fixing part provided with a rotation shaft insertion hole in which the rotation shaft is inserted and fixed, and the outer-circumferential projection part is disposed on the outer circumference of the outer-circumferential projection part fixing part.

8. The rotation transmission mechanism for manpowered vehicle according to Claim 6 or 7, wherein the outer-rotating member has the inner-circumferential projection part formed of a rigid member, and has a stopper part projecting at the end surface part at the inner-circumferential side of at least one of the inner-circumferential projection part or has at least one stopper part projecting at the inner-circumferential side of the outer cylindrical part, and the inner-rotating member has at least one idling prevention projection which is provided so as to project on the outer circumference of the outer-circumferential projection part fixing part and is brought into contact with the stopper part when the inner-rotating member and the outer-rotating member relatively rotate over a set angle.

9. The rotation transmission mechanism for manpowered vehicle according to any one of Claims 1 through 8, wherein the outer-circumferential 1 projection part of the inner-rotating member and the inner-circumferential projection part of the outer-rotating member are radially disposed in a plurality at the outer-circumferential side of the rotation shaft and the inner-circumferential side of the outer cylindrical part of the outer-rotating member, respectively.

10. Amanpowered vehicle comprising: a rotation shaft retaining part; a rotation shaft rotatably retained at the rotation shaft retaining part; a rotation transmission mechanism for manpowered vehicle, which is disposed at the rotation shaft, according to any one of Claims 1 through 9; and a wheel part disposed on the outer circumference of the outer-rotating member of the rotation transmission mechanism for manpowered vehicle.

11. A bicycle comprising: a rotation shaft; a set of the rotation transmission mechanism for manpowered vehicle according to any one of Claims 1 through 9, which is disposed halfway in the lengthwise direction of the rotation shaft; left and right crank arms disposed at both end parts of the rotation shaft with a 180-degree difference in phase; and a chain ring formed or fixed at the side plate part of the outer-rotating member or the outer cylindrical part.

12. The bicycle according to Claim 11, wherein a plurality of chain rings are detachably disposed on and provided with the outer circumference of the outer cylindrical part of the outer-rotating member.
